# EUROPEAN PATENT SPECIFICATION

(11) **EP 3 848 771 B1**
(45) Date of publication and mention of the grant of the patent: **26.04.2023**
(21) Application number: 19867201.6
(22) Date of filing: 25.09.2019
(51) Int. Cl.: G05D 1/10, G08G 5/00

(54) **AIRCRAFT CONTROL METHOD AND APPARATUS**
FLUGZEUGSTEUERUNGSVERFAHREN UND -VORRICHTUNG
PROCÉDÉ ET APPAREIL DE COMMANDE D'AÉRONEF

(30) Priority: 30.09.2018 CN 201811160920
(43) Date of publication of application: 14.07.2021
(73) Proprietor: HUAWEI TECHNOLOGIES CO., LTD., Shenzhen, Guangdong 518129 (CN)
(72) Inventor: SUN, Manli, Shenzhen, Guangdong 518129 (CN); GE, Cuili, Shenzhen, Guangdong 518129 (CN); YANG, Yanmei, Shenzhen, Guangdong 518129 (CN); MA, Jingwang, Shenzhen, Guangdong 518129 (CN)
(74) Representative: Gill Jennings & Every LLP
(86) International application number: PCT/CN2019/107777
(87) International publication number: WO 2020/063655

(56) References cited:
- CN-A- 104 932 525
- CN-A- 104 950 907
- CN-A- 106 296 873
- CN-A- 106 898 161
- US-A1- 2016 240 087

## Description

### TECHNICAL FIELD

This application relates to the field of communications technologies, and in particular, to an aircraft control method and an apparatus.

### BACKGROUND

With development of science and technology, increasingly more aircrafts are applied to people's production and life. However, a relatively high security risk is caused by "unauthorized flight" of an aircraft in many important areas (for example, an airport). Therefore, how to monitor and prevent the "unauthorized flight" of the aircraft becomes an urgent problem to be resolved.

In a related technology, an unmanned aerial vehicle is a common aircraft. A ground controller communicates with the unmanned aerial vehicle through a control link, and a user holds the ground controller to control flight of the unmanned aerial vehicle. To prevent the unmanned aerial vehicle from flying in a no-fly zone (namely, "unauthorized flight"), a plurality of geofences are usually installed on an edge of the no-fly zone. When the unmanned aerial vehicle flies toward the no-fly zone, and a distance between the unmanned aerial vehicle and the geofence reaches a preset distance value, the geofence can block communication between the unmanned aerial vehicle and the ground controller. In this case, the unmanned aerial vehicle stops moving forward and returns along a same route. In this way, the unmanned aerial vehicle can be prevented from entering the no-fly zone.

However, efficiency of preventing the aircraft from flying in the no-fly zone is relatively low, and the plurality of geofences need to be pre-installed on the edge of the no-fly zone. Consequently, an advance preparation process is relatively complex and time-consuming.

US 2016/240087 A1 describes a restricted area avoidance system.

CN104932525 A also describes a system and a method for avoiding no-fly zones.

### SUMMARY

This application provides an aircraft control method and an apparatus. The following examples/ aspects/embodiments/options are not according to the invention and are present for illustration purposes only. The invention as such is set forth in the independent claims. The technical solutions are as follows:

According to a first aspect, an aircraft control method is provided. The method includes: An access management function AMF network element obtains information about a no-fly zone of an aircraft. The AMF network element sends reference information to a control apparatus when a shortest distance between the aircraft and the no-fly zone is less than or equal to a first preset value, where the reference information includes at least one of first indication information and location information of the aircraft, and the first indication information is used to indicate that the shortest distance between the aircraft and the no-fly zone is less than or equal to the first preset value.

The control apparatus delivers the information about the no-fly zone to the aircraft through the AMF network element, and the AMF network element can monitor whether the shortest distance between the aircraft and the no-fly zone is less than or equal to the first preset value. Therefore, when the shortest distance between the aircraft and the no-fly zone is less than or equal to the first preset value, the AMF network element can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

Optionally, the information about the no-fly zone includes a network identifier of the no-fly zone or a geographical identifier of the no-fly zone.

Optionally, the method further includes: The AMF network element determines, based on the location information of the aircraft and the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. That the AMF network element determines, based on the location information of the aircraft and the information about the no-fly zone, that the shortest distance between the aircraft and the no-fly zone is less than or equal to the first preset value includes: The AMF network element determines, based on the location information of the aircraft, that a distance between the aircraft and a center point of a coverage area of any one of the at least one cell is less than or equal to the first preset value.

Optionally, the information about the no-fly zone includes the network identifier of the no-fly zone, and the network identifier of the no-fly zone includes an identifier of at least one cell. The method further includes: When the AMF network element determines that the aircraft accesses any one of the at least one cell, the AMF network element determines that the shortest distance between the aircraft and the no-fly zone is less than or equal to the first preset value. When the aircraft accesses the any cell, the AMF network element determines that the shortest distance between the aircraft and the no-fly zone is less than or equal to the first preset value. When the aircraft does not access the any cell, the AMF network element determines that the shortest distance between the aircraft and the no-fly zone is greater than the first preset value. It should be noted that a coverage area of a base station forms a cell, and that the aircraft accesses the cell means that the aircraft is connected to the base station that provides the cell.

Optionally, the information about the no-fly zone includes the geographical identifier of the no-fly zone. The method further includes: The AMF network element determines the network identifier of the no-fly zone based on the geographical identifier of the no-fly zone.

Optionally, that an AMF network element obtains information about a no-fly zone includes: The AMF network element receives the geographical identifier of the no-fly zone from the control apparatus or a unified data management UDM network element.

Optionally, the information about the no-fly zone includes the network identifier of the no-fly zone. That an AMF network element obtains information about a no-fly zone of an aircraft includes: The AMF network element receives the network identifier of the no-fly zone from a policy control function PCF network element or a UDM network element.

Optionally, the method further includes: The AMF network element sends the network identifier or the geographical identifier of the no-fly zone to the aircraft.

Optionally, the method further includes: The AMF network element sends identification information to the aircraft, where the identification information is used to identify an apparatus with which the aircraft is allowed to communicate. The AMF network element sends second indication information and/or third indication information to the aircraft, where the second indication information is used to indicate the aircraft to stop, when the shortest distance between the aircraft and the no-fly zone is less than or equal to the first preset value and the aircraft is in a restricted service state, processing information from another apparatus different from the apparatus corresponding to the identification information; and the third indication information is used to indicate the aircraft to stop, when the shortest distance between the aircraft and the no-fly zone is less than or equal to the first preset value and the aircraft is in the restricted service state, sending information to the another apparatus different from the apparatus corresponding to the identification information. The aircraft stops processing the information from the another apparatus different from the apparatus corresponding to the identification information, to prevent the aircraft from being controlled by the another apparatus different from the apparatus corresponding to the identification information, so that when the aircraft enters the restricted service state, the aircraft can be controlled only by the apparatus corresponding to the identification information. The aircraft stops sending the information to the another apparatus different from the apparatus corresponding to the identification information, so that the aircraft can be prevented from sending, to the another apparatus in the no-fly zone or near the no-fly zone, information that needs to be kept secret from the another apparatus, to prevent information leakage.

Optionally, the location information of the aircraft is location information that is of the aircraft and that is reported by the aircraft to the AMF network element, or location information that is of the aircraft and that is obtained through positioning by the AMF network element, or location information determined by the AMF network element based on location information that is of the aircraft and that is reported by the aircraft to the AMF network element and location information that is of the aircraft and that is obtained through positioning by the AMF network element. To be specific, the AMF network element may determine the location information of the aircraft in a plurality of manners, and the location information that is of the aircraft and that is determined based on location information obtained by a plurality of apparatuses is relatively accurate.

According to a second aspect, an aircraft control method is provided. The method includes: An aircraft receives information about a no-fly zone of the aircraft from an AMF network element. When a shortest distance between the aircraft and the no-fly zone is less than or equal to a first preset value, the aircraft deregisters, enters a restricted service state, or sends location information of the aircraft to a control apparatus or the AMF network element. After deregistration, the aircraft usually lands in place or returns along a same route, to prevent the aircraft from flying in the no-fly zone.

Optionally, the information about the no-fly zone includes a network identifier of the no-fly zone or a geographical identifier of the no-fly zone.

Optionally, the method further includes: The aircraft determines, based on the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. The method further includes: When the aircraft determines that the aircraft accesses any one of the at least one cell, the aircraft determines that the shortest distance between the aircraft and the no-fly zone is less than or equal to the first preset value; or when the aircraft determines that a radio signal strength of any one of the at least one cell is greater than or equal to a second preset value, the aircraft determines that the shortest distance between the aircraft and the no-fly zone is less than or equal to the first preset value. It should be noted that the radio signal strength that is of the cell and that is measured by the aircraft is negatively correlated to a distance between the aircraft and the cell. To be specific, when the aircraft is closer to the cell, the radio signal strength that is of the cell and that is measured by the aircraft is stronger. When the aircraft is farther away from the cell, the radio signal strength that is of the cell and that is measured by the aircraft is weaker. Therefore, the aircraft may determine a distance between the aircraft and each cell based on a measured radio signal strength of each cell. When the aircraft determines that the radio signal strength of the any one of the at least one cell is greater than or equal to the second preset value, the aircraft determines that the shortest distance between the aircraft and the no-fly zone is less than or equal to the first preset value. When the aircraft determines that the radio signal strength of each cell is less than the second preset value, the aircraft determines that the shortest distance between the aircraft and the no-fly zone is greater than the first preset value.

Optionally, the method further includes: The aircraft receives identification information from the AMF network element, where the identification information is used to identify an apparatus with which the aircraft is allowed to communicate. The aircraft receives second indication information from the AMF network element, where the second indication information is used to indicate the aircraft to stop, when the shortest distance between the aircraft and the no-fly zone is less than or equal to the first preset value and the aircraft is in the restricted service state, processing information from another apparatus different from the apparatus corresponding to the identification information. That the aircraft enters a restricted service state includes: The aircraft stops, based on the second indication information, processing the information from the another apparatus.

Optionally, the method further includes: The aircraft receives third indication information from the AMF network element, where the third indication information is used to indicate the aircraft to stop, when the shortest distance between the aircraft and the no-fly zone is less than or equal to the first preset value and the aircraft is in the restricted service state, sending information to the another apparatus. That the aircraft enters a restricted service state includes: The aircraft stops, based on the third indication information, sending the information to the another apparatus.

Optionally, the method further includes: The aircraft receives identification information from the AMF network element, where the identification information is used to identify an apparatus with which the aircraft is allowed to communicate. The aircraft receives third indication information from the AMF network element, where the third indication information is used to indicate the aircraft to stop, when the shortest distance between the aircraft and the no-fly zone is less than or equal to the first preset value and the aircraft is in the restricted service state, sending information to another apparatus different from the apparatus corresponding to the identification information. That the aircraft enters a restricted service state includes: The aircraft stops, based on the third indication information, sending the information to the another apparatus.

According to a third aspect, an aircraft control method is provided. The method further includes: A control apparatus receives reference information of an aircraft from an AMF network element, where the reference information includes at least one of first indication information and location information of the aircraft, and the first indication information is used to indicate that a shortest distance between the aircraft and a no-fly zone of the aircraft is less than or equal to a first preset value. The control apparatus sends a control instruction to the aircraft based on the reference information, where the control instruction is used to prohibit the aircraft from flying in the no-fly zone.

Optionally, the reference information includes the location information of the aircraft. That the control apparatus sends a control instruction to the aircraft based on the reference information includes: The control apparatus sends the control instruction to the aircraft based on the location information of the aircraft in the reference information and a geographical identifier of the no-fly zone.

Optionally, the method further includes: The control apparatus receives location information from the aircraft. That the control apparatus sends the control instruction to the aircraft based on the location information of the aircraft in the reference information and a geographical identifier of the no-fly zone includes: The control apparatus determines, based on the location information of the aircraft in the reference information, the location information from the aircraft, and the geographical identifier of the no-fly zone, whether the shortest distance between the aircraft and the no-fly zone is less than or equal to the first preset value. The control apparatus sends the control instruction to the aircraft when the shortest distance between the aircraft and the no-fly zone is less than or equal to the first preset value. To be specific, after the control apparatus receives the reference information reported by the AMF network element, if the control apparatus receives the location information of the aircraft, the control apparatus re-determines the location information of the aircraft based on the received location information of the aircraft. Then, the control apparatus re-determines, based on the location information and the geographical identifier of the no-fly zone, whether the shortest distance between the aircraft and the no-fly zone is less than or equal to the first preset value, to determine whether the aircraft needs to be controlled, so that the AMF network element can be prevented from incorrectly determining whether the shortest distance between the aircraft and the no-fly zone is less than or equal to the first preset value.

Optionally, the method further includes: The control apparatus sends the geographical identifier of the no-fly zone to the AMF network element, a PCF network element, or a UDM network element.

According to a fourth aspect, an aircraft control method is provided. The method includes: obtaining a geographical identifier of a no-fly zone of an aircraft; determining a network identifier of the no-fly zone based on the geographical identifier of the no-fly zone; and sending the network identifier of the no-fly zone to an AMF network element or the aircraft.

Optionally, the obtaining geographical identifier of a no-fly zone of an aircraft includes: receiving the geographical identifier of the no-fly zone from a control apparatus.

According to a fifth aspect, an aircraft control apparatus is provided, and may be located in an AMF network element. The aircraft control apparatus includes: an obtaining module, configured to obtain information about a no-fly zone of an aircraft; a first sending module, configured to send reference information to a control apparatus when a shortest distance between the aircraft and the no-fly zone is less than or equal to a first preset value, where the reference information includes at least one of first indication information and location information of the aircraft, and the first indication information is used to indicate that the shortest distance between the aircraft and the no-fly zone is less than or equal to the first preset value.

Optionally, the information about the no-fly zone includes a network identifier of the no-fly zone or a geographical identifier of the no-fly zone.

Optionally, the aircraft control apparatus further includes a first determining module, configured to determine, based on the location information of the aircraft and the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. The first determining module is configured to determine, based on the location information of the aircraft, that a distance between the aircraft and a center point of a coverage area of any one of the at least one cell is less than or equal to the first preset value.

Optionally, the information about the no-fly zone includes the network identifier of the no-fly zone, and the network identifier of the no-fly zone includes an identifier of at least one cell. The aircraft control apparatus further includes a second determining module, configured to: when determining that the aircraft accesses any one of the at least one cell, determine that the shortest distance between the aircraft and the no-fly zone is less than or equal to the first preset value.

Optionally, the information about the no-fly zone includes the geographical identifier of the no-fly zone. The aircraft control apparatus further includes a third determining module, configured to determine the network identifier of the no-fly zone based on the geographical identifier of the no-fly zone.

Optionally, the obtaining module is configured to receive the geographical identifier of the no-fly zone from the control apparatus or a UDM network element.

Optionally, the information about the no-fly zone includes the network identifier of the no-fly zone. The obtaining module is configured to receive the network identifier of the no-fly zone from a PCF network element or a UDM network element.

Optionally, the aircraft control apparatus further includes a second sending module, configured to send the network identifier or the geographical identifier of the no-fly zone to the aircraft.

Optionally, the aircraft control apparatus further includes: a third sending module, configured to send identification information to the aircraft, where the identification information is used to identify an apparatus with which the aircraft is allowed to communicate; and a fourth sending module, configured to send second indication information and/or third indication information to the aircraft, where the second indication information is used to indicate the aircraft to stop, when the shortest distance between the aircraft and the no-fly zone is less than or equal to the first preset value and the aircraft is in a restricted service state, processing information from another apparatus different from the apparatus corresponding to the identification information; and the third indication information is used to indicate the aircraft to stop, when the shortest distance between the aircraft and the no-fly zone is less than or equal to the first preset value and the aircraft is in the restricted service state, sending information to the another apparatus different from the apparatus corresponding to the identification information.

Optionally, the location information of the aircraft is location information that is of the aircraft and that is reported by the aircraft to the AMF network element, or location information that is of the aircraft and that is obtained through positioning by the AMF network element, or location information determined by the AMF network element based on location information that is of the aircraft and that is reported by the aircraft to the AMF network element and location information that is of the aircraft and that is obtained through positioning by the AMF network element.

According to a sixth aspect, an aircraft control apparatus is provided, and may be located in an aircraft. The aircraft control apparatus includes: a first receiving module, configured to receive information about a no-fly zone of the aircraft from an AMF network element; and a processing module, configured to: when a shortest distance between the aircraft and the no-fly zone is less than or equal to a first preset value, deregister, enter a restricted service state, or send location information of the aircraft to a control apparatus or the AMF network element.

Optionally, the information about the no-fly zone includes a network identifier of the no-fly zone or a geographical identifier of the no-fly zone.

Optionally, the aircraft control apparatus further includes a first determining module, configured to determine, based on the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. The first determining module is configured to: when determining that the aircraft accesses any one of the at least one cell, determine that the shortest distance between the aircraft and the no-fly zone is less than or equal to the first preset value; or when determining that a radio signal strength of any one of the at least one cell is greater than or equal to a second preset value, determine that the shortest distance between the aircraft and the no-fly zone is less than or equal to the first preset value.

Optionally, the aircraft control apparatus further includes: a second receiving module, configured to receive identification information from the AMF network element, where the identification information is used to identify an apparatus with which the aircraft is allowed to communicate; and a third receiving module, configured to receive second indication information from the AMF network element, where the second indication information is used to indicate the aircraft to stop, when the shortest distance between the aircraft and the no-fly zone is less than or equal to the first preset value and the aircraft is in the restricted service state, processing information from another apparatus different from the apparatus corresponding to the identification information. The processing module is configured to stop, based on the second indication information, processing the information from the another apparatus.

Optionally, the aircraft control apparatus further includes a fourth receiving module, configured to receive third indication information from the AMF network element, where the third indication information is used to indicate the aircraft to stop, when the shortest distance between the aircraft and the no-fly zone is less than or equal to the first preset value and the aircraft is in the restricted service state, sending information to the another apparatus. The processing module is configured to stop, based on the third indication information, sending the information to the another apparatus.

Optionally, the aircraft control apparatus further includes: a fifth receiving module, configured to receive identification information from the AMF network element, where the identification information is used to identify an apparatus with which the aircraft is allowed to communicate; and a sixth receiving module, configured to receive third indication information from the AMF network element, where the third indication information is used to indicate the aircraft to stop, when the shortest distance between the aircraft and the no-fly zone is less than or equal to the first preset value and the aircraft is in the restricted service state, sending information to another apparatus different from the apparatus corresponding to the identification information. The processing module is configured to stop, based on the third indication information, sending the information to the another apparatus.

According to a seventh aspect, an aircraft control apparatus is provided, and may be located in a control apparatus. The aircraft control apparatus further includes: a first receiving module, configured to receive reference information of an aircraft from an AMF network element, where the reference information includes at least one of first indication information and location information of the aircraft, and the first indication information is used to indicate that a shortest distance between the aircraft and a no-fly zone of the aircraft is less than or equal to a first preset value; and a first sending module, configured to send a control instruction to the aircraft based on the reference information, where the control instruction is used to prohibit the aircraft from flying in the no-fly zone.

Optionally, the reference information includes the location information of the aircraft. The first sending module includes a sending unit, configured to send the control instruction to the aircraft based on the location information of the aircraft in the reference information and a geographical identifier of the no-fly zone.

Optionally, the aircraft control apparatus further includes a second receiving module, configured to receive location information from the aircraft. The sending unit is configured to: determine, based on the location information of the aircraft in the reference information, the location information from the aircraft, and the geographical identifier of the no-fly zone, whether the shortest distance between the aircraft and the no-fly zone is less than or equal to the first preset value; and send the control instruction to the aircraft when the shortest distance between the aircraft and the no-fly zone is less than or equal to the first preset value.

Optionally, the aircraft control apparatus further includes a second sending module, configured to send the geographical identifier of the no-fly zone to the AMF network element, a PCF network element, or a UDM network element.

According to an eighth aspect, an aircraft control apparatus is provided. The aircraft control apparatus includes: an obtaining module, configured to obtain a geographical identifier of a no-fly zone of an aircraft; a determining module, configured to determine a network identifier of the no-fly zone based on the geographical identifier of the no-fly zone; and a sending module, configured to send the network identifier of the no-fly zone to an AMF network element or the aircraft.

Optionally, the obtaining module is configured to receive the geographical identifier of the no-fly zone from a control apparatus.

According to a ninth aspect, a communications system is provided. The communications system includes an AMF network element, an aircraft, and a control apparatus.

The AMF network element includes an apparatus configured to perform the method according to the first aspect.

The aircraft includes an apparatus configured to perform the method according to the second aspect.

The control apparatus includes an apparatus configured to perform the method according to the third aspect.

Optionally, the communications system further includes a PCF network element or a UDM network element. The PCF network element and the UDM network element each include an apparatus configured to perform the method according to the fourth aspect. Alternatively, the AMF network element further includes the apparatus configured to perform the method according to the fourth aspect.

According to a tenth aspect, a computer readable storage medium is provided. The storage medium stores a computer program. The computer program is executed by a processor, to implement the method according to the first aspect; or the computer program is executed by a processor, to implement the method according to the second aspect; or the computer program is executed by a processor, to implement the method according to the third aspect; or the computer program is executed by a processor, to implement the method according to the fourth aspect.

According to an eleventh aspect, a computer program product including an instruction is provided. When the computer program product runs on a computer, the computer is enabled to perform the method according to the first aspect. Alternatively, when the computer program product runs on a computer, the computer is enabled to perform the method according to the second aspect. Alternatively, when the computer program product runs on a computer, the computer is enabled to perform the method according to the third aspect. Alternatively, when the computer program product runs on a computer, the computer is enabled to perform the method according to the fourth aspect.

According to a twelfth aspect, a communications apparatus is provided. The communications apparatus includes at least one processor, at least one interface, a memory, and at least one communications bus. The processor is configured to execute a program stored in the memory, to implement the method according to the first aspect. Alternatively, the processor is configured to execute a program stored in the memory, to implement the method according to the second aspect. Alternatively, the processor is configured to execute a program stored in the memory, to implement the method according to the third aspect. Alternatively, the processor is configured to execute a program stored in the memory, to implement the method according to the fourth aspect.

### BRIEF DESCRIPTION OF DRAWINGS

FIG. 1 is a schematic structural diagram of a communications system;
FIG. 2 is a schematic structural diagram of a communications apparatus according to an embodiment of this application;
FIG. 3 is a flowchart of a first aircraft control method according to an embodiment of this application;
FIG. 4 is a schematic diagram of locations of an aircraft and a cell according to an embodiment of this application;
FIG. 5 is a flowchart of a second aircraft control method according to an embodiment of this application;
FIG. 6 is a flowchart of a third aircraft control method according to an embodiment of this application;
FIG. 7 is a flowchart of a fourth aircraft control method according to an embodiment of this application;
FIG. 8 is a flowchart of a fifth aircraft control method according to an embodiment of this application;
FIG. 9 is a flowchart of a sixth aircraft control method according to an embodiment of this application;
FIG. 10 is a flowchart of a seventh aircraft control method according to an embodiment of this application;
FIG. 11 is a flowchart of an eighth aircraft control method according to an embodiment of this application;
FIG. 12 is a flowchart of a ninth aircraft control method according to an embodiment of this application;
FIG. 13 is a flowchart of a tenth aircraft control method according to an embodiment of this application;
FIG. 14 is a schematic structural diagram of an aircraft control apparatus according to an embodiment of this application;
FIG. 15 is another schematic structural diagram of an aircraft control apparatus according to an embodiment of this application;
FIG. 16 is another schematic structural diagram of an aircraft control apparatus according to an embodiment of this application;
FIG. 17 is another schematic structural diagram of an aircraft control apparatus according to an embodiment of this application;
FIG. 18 is a schematic structural diagram of another aircraft control apparatus according to an embodiment of this application;
FIG. 19 is another schematic structural diagram of another aircraft control apparatus according to an embodiment of this application;
FIG. 20 is a schematic structural diagram of another aircraft control apparatus according to an embodiment of this application;
FIG. 21 is another schematic structural diagram of another aircraft control apparatus according to an embodiment of this application;
FIG. 22 is a schematic structural diagram of another aircraft control apparatus according to an embodiment of this application;
FIG. 23 is a schematic structural diagram of a communications system according to an embodiment of this application;
FIG. 24 is another schematic structural diagram of a communications system according to an embodiment of this application;
FIG. 25 is another schematic structural diagram of a communications system according to an embodiment of this application;
FIG. 26 is another schematic structural diagram of a communications system according to an embodiment of this application;
FIG. 27 is another schematic structural diagram of a communications system according to an embodiment of this application; and
FIG. 28 is another schematic structural diagram of a communications system according to an embodiment of this application.

### DESCRIPTION OF EMBODIMENTS

To make the objectives, technical solutions, and advantages of this application clearer, the following further describes the implementations of this application in detail with reference to the accompanying drawings.

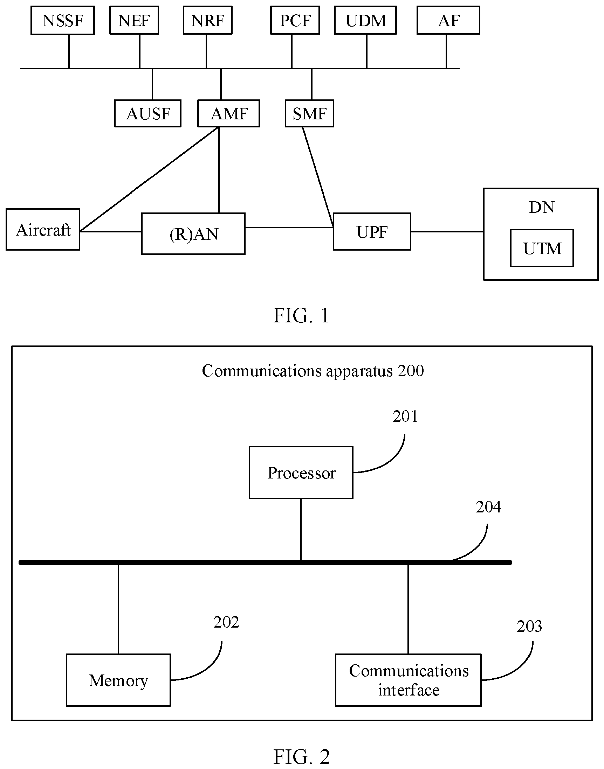

FIG. 1 shows a communications system. The communications system may be a 5th generation (5th-Generation, 5G) mobile communications system or a future evolved communications system. The communications system may include an aircraft (for example, an unmanned aerial vehicle), an access management function (Access Management Function, AMF) network element, a policy control function (Policy Control Function, PCF) network element, a unified data management (Unified Data Management, UDM) network element, a (radio) access network ((Radio) access network, (R)AN) network element, a user plane function (User Plane Function, UPF) network element, an authentication server function (Authentication Server Function, AUSF) network element, a session management function (Session Management Function, SMF) network element, a network slice selection function (Network Slice Selection Function, NSSF) network element, a network exposure function (Network Exposure Function, NEF) network element, a network function repository function (Network Function Repository Function, NRF) network element, an application function (Application function, AF) network element, and the like.

The aircraft may be user equipment (user equipment, UE) in the communications system. The aircraft and the RAN network element communicate with each other by using an air interface technology. The UE may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The aircraft has a flight function.

The RAN network element is responsible for functions such as radio resource management, quality of service (quality of service, QoS) management, and data compression and encryption on an air interface side. The RAN network element includes various types of base stations, for example, a macro base station, a micro base station (also referred to as a small cell), a relay station, and an access point.

The AMF network element is a core network element, and is mainly responsible for signaling processing, for example, functions such as access control, mobility management, attachment and detachment, and gateway selection. When providing a service for a session in the terminal device, the AMF network element provides a control plane storage resource for the session, to store a session identifier, an SMF network element identifier associated with the session identifier, and the like.

The SMF network element is responsible for UPF network element selection, UPF network element redirection, internet protocol (internet protocol, IP) address assignment, bearer establishment, modification, and release, and QoS control.

The UPF network element is responsible for forwarding and receiving user data in the UE. The UPF network element may receive the user data from a data network (Data Network, DN), and transmit the user data to the UE through the RAN network element. Alternatively, the UPF network element may receive the user data from the UE through the RAN network element, and forward the user data to a data network. A transmission resource and a scheduling function in the UPF network element that provide a service for the UE are managed and controlled by the SMF network element.

The PCF network element supports providing a unified policy framework to control network behavior and providing a policy rule for a control layer network element, and is responsible for obtaining subscriber subscription information related to a policy decision.

The AUSF network element supports providing an authentication function.

The NEF network element supports secure interaction between a 3rd generation partnership project (3rd Generation Partnership Project, 3GPP) network and a third-party application. The NEF network element can securely expose a network capability and an event to a third party, to enhance or improve application quality of service. The 3GPP network can also securely obtain related data from the third party, to increase an intelligent decision-making capability of the network. In addition, the NEF network element supports restoring structured data from a UDR network element or storing structured data in a UDR network element.

The UDR network element is responsible for storing the structured data. The stored content includes subscription data and policy data, externally exposed structured data, and application-related data.

The AF network element supports interacting with the 3GPP network to provide a service, for example, affect a data routing decision, provide a policy control function, or provide some third-party services for a network side.

The UDM network element supports the following functions: 3GPP authentication and key agreement (Authentication and key agreement, AKA) authentication credential generation, user identity processing (for example, storage for management), subscription data-based access authorization, registration management of a serving network element of a user (for example, a function of storing the AMF that serves the UE, or a function of storing the SMF that provides a protocol data unit (Protocol Data Unit, PDU) session for the UE), service/session continuity support, a lawful interception function, subscription management, short message service (Short Message Service, SMS) management, and the like.

Some apparatuses in the communications system may be classified into a control layer apparatus and a user layer apparatus, and the control layer apparatus may be connected to the user layer apparatus. For example, the control layer apparatus may include the AMF network element, the PCF network element, the UDM network element, the AUSF network element, the SMF network element, the NSSF network element, the NEF network element, and the NRF network element. The user layer apparatus may include the aircraft and the UPF network element. The AF network element and the RAN network element each may be both the control layer apparatus and the user layer apparatus.

It should be noted that all control layer apparatuses in the communications system may be integrated into one or more servers, or each control layer apparatus is an independent server. This is not limited. The communications system shown in FIG. 1 may further include another user layer apparatus (for example, a controller of an unmanned aerial vehicle, where the controller may be a remote control, a mobile phone, a tablet computer, or the like) in addition to the aircraft, the RAN network element, and the UPF network element. A plurality of user layer apparatuses may access a data network (Data Network, DN) through an operator network, and are connected through the data network.

An aircraft control method provided in this application relates to the aircraft and the network elements in the foregoing communications system, and the aircraft control method provided in this application further relates to a control apparatus. The control apparatus may include a user layer apparatus located in a data network. In this case, the control apparatus may be referred to as an unmanned aerial system traffic management (Unmanned Aerial Vehicle Traffic Management, UTM) network element. The UTM network element mainly has a function that can be provided by a third-party unmanned aerial vehicle cloud server, and may also be referred to as an "unmanned aerial vehicle traffic service platform". The UTM network element may interact with the network element in the communications system to provide a communication service for an unmanned aerial vehicle. The UTM network element may be integrated into the AF network element. Alternatively, the control apparatus may include a control layer apparatus. In this case, the control apparatus may be referred to as an unmanned aerial vehicle management function (Unmanned Aerial Vehicle Management Function, UMF) network element. The UMF network element may be integrated into the AMF network element, the PCF network element, or the NEF network element. Alternatively, the control apparatus may include both a control layer apparatus and a user layer apparatus that establish a communication connection. Optionally, the user layer apparatus may communicate with another control layer apparatus (for example, the AMF network element, the PCF network element, or the UDM network element) through the control layer apparatus. In FIG. 1, an example in which the control apparatus includes the control layer apparatus is used.

FIG. 2 is a schematic structural diagram of a communications apparatus 200 according to an embodiment of this application. The communications apparatus may be any apparatus in FIG. 1. The communications apparatus 200 may include a processor 201, a memory 202, a communications interface 203, and a bus 204. The processor 201, the memory 202, the communications interface 203 are communicatively connected through the bus 204. There may be one or more communications interfaces 203, configured to communicate with another apparatus under control of the processor 201. The memory 202 is configured to store a computer instruction. The processor 201 can invoke, through the bus 204, the computer instruction stored in the memory 202.

For example, the communications apparatus shown in FIG. 2 may be an AMF network element, or a chip or a system-on-a-chip in the AMF network element. The processor 201 can invoke, through the bus 204, the computer instruction stored in the memory 202, to perform an action of the AMF network element in the following method embodiment. The communications apparatus shown in FIG. 2 may alternatively be any other apparatus (different from the AMF network element) in the following method embodiment, or a chip or a system-on-a-chip in the another apparatus. The processor 201 can invoke, through the bus 204, the computer instruction stored in the memory 202, to perform an action of the any other apparatus in the following method embodiment.

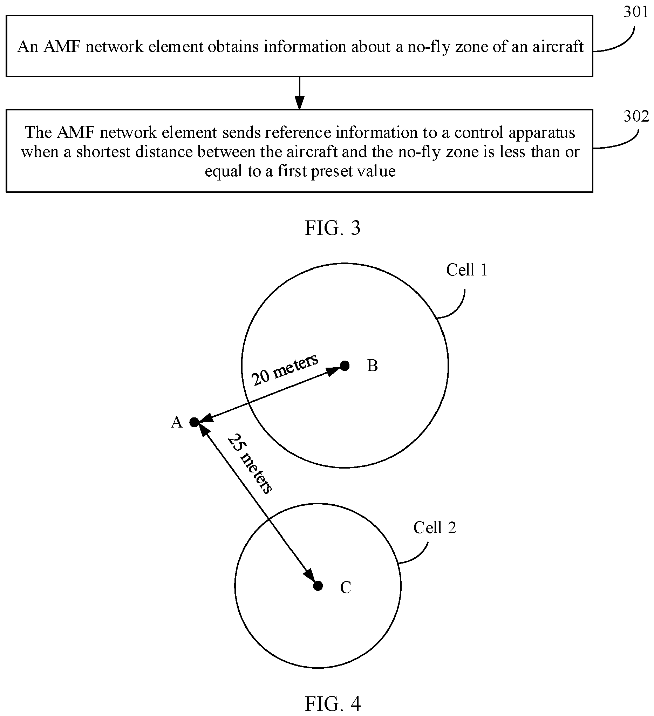

FIG. 3 is a flowchart of a first aircraft control method according to an embodiment of this application. The aircraft control method may be performed by the AMF network element in the communications system shown in FIG. 1, or may be performed by another network element with a similar function. This is not limited. Details are as follows:

Step 301: The AMF network element obtains information about a no-fly zone of an aircraft.

The information about the no-fly zone may include a network identifier of the no-fly zone. The network identifier may include an identifier of at least one cell, and a cell corresponding to the cell identifier belongs to the no-fly zone. The information about the no-fly zone may alternatively include a geographical identifier of the no-fly zone, for example, a place name or longitude and latitude information.

In an example, the AMF network element obtains the information about the no-fly zone of the aircraft in a plurality of manners. For example, the AMF network element may obtain the information about the no-fly zone of the aircraft by receiving the information that is about the no-fly zone of the aircraft and that is sent by another apparatus. The another apparatus may include a control apparatus, an NEF network element, a PCF network element, a UDM network element, or the like. For example, the AMF network element receives the geographical identifier of the no-fly zone from the control apparatus or the UDM network element, or the AMF network element receives the network identifier of the no-fly zone from the PCF network element or the UDM network element.

In another example, the AMF network element obtains the information about the no-fly zone of the aircraft based on a trigger operation performed by a user of the AMF network element on the AMF network element. This is not limited.

Step 302: The AMF network element sends reference information to the control apparatus when a shortest distance between the aircraft and the no-fly zone is less than or equal to a first preset value.

The reference information may include at least one of first indication information and location information of the aircraft. The reference information may be used by the control apparatus to determine whether the aircraft approaches or is located in the no-fly zone, so that the control apparatus can send a control instruction to the aircraft in a timely manner.

For example, the control instruction may be a hover instruction, a return instruction, an in-place landing instruction, or an instruction for flying along a specified route in a direction away from the no-fly zone. These control instructions can be used to control flight of the aircraft, to prohibit the aircraft from flying in the no-fly zone.

The first indication information is used to indicate that the shortest distance between the aircraft and the no-fly zone is less than or equal to the first preset value.

According to the method provided in the foregoing embodiment, the AMF network element obtains the information about the no-fly zone of the aircraft. When the shortest distance between the aircraft and the no-fly zone is less than or equal to the first preset value, the AMF network element sends the reference information to the control apparatus, so that the control apparatus can control the aircraft in a timely manner based on the reference information. In this way, geofences do not need to be installed on an edge of the no-fly zone, thereby simplifying an advance preparation process and reducing costs.

Optionally, in an implementation scenario of the foregoing embodiment, the method further includes: Before step 302, the AMF network element determines, based on the location information of the aircraft and the information about the no-fly zone, whether the shortest distance between the aircraft and the no-fly zone is less than or equal to the first preset value.

It should be noted that the AMF network element may obtain the location information of the aircraft in a plurality of manners.

In a first example, the location information of the aircraft may be location information that is of the aircraft and that is reported by the aircraft to the AMF network element. In this case, before the AMF network element determines, based on the location information of the aircraft and the information about the no-fly zone, whether the shortest distance between the aircraft and the no-fly zone is less than or equal to the first preset value, the AMF network element further needs to receive the location information of the aircraft that is sent by the aircraft. The aircraft may periodically send the location information of the aircraft to the AMF network element. Alternatively, after the AMF network element receives the information about the no-fly zone, the AMF network element sends the information about the no-fly zone to the aircraft, so that the aircraft can report the location information of the aircraft to the AMF network element when determining, based on the information about the no-fly zone, that the shortest distance between the aircraft and the no-fly zone is less than or equal to the first preset value.

In a second example, the location information of the aircraft may be location information that is of the aircraft and that is obtained through positioning by the AMF network element. It should be noted that the AMF network element may be connected to a plurality of measurement apparatuses. Each measurement apparatus may measure strength of a signal sent by the aircraft, and the signal strength measured by the measurement apparatus is negatively correlated to a distance between the measurement apparatus and the aircraft. In other words, the signal strength measured by the measurement apparatus can reflect the distance between the measurement apparatus and the aircraft. Therefore, the AMF may determine a distance between each of the plurality of measurement apparatuses and the aircraft based on strength that is of a signal sent by the aircraft and that is measured by the measurement apparatus and a relationship between the signal strength and the distance, and position the aircraft based on a location of the measurement apparatus.

In a third example, the location information of the aircraft is location information determined by the AMF network element based on location information that is of the aircraft and that is reported by the aircraft to the AMF network element and location information that is of the aircraft and that is obtained through positioning by the AMF network element. For example, the AMF network element may determine whether a distance between a location indicated by the location information that is of the aircraft and that is obtained through positioning by the AMF network element and a location indicated by the location information reported by the aircraft is less than or equal to a preset distance threshold. If the distance between the location indicated by the location information that is of the aircraft and that is obtained through positioning by the AMF network element and the location indicated by the location information reported by the aircraft is greater than the preset distance threshold, the AMF network element determines the location information that is of the aircraft and that is obtained through positioning by the AMF network element as the location information of the aircraft. If the distance between the location indicated by the location information that is of the aircraft and that is obtained through positioning by the AMF network element and the location indicated by the location information reported by the aircraft is less than or equal to the preset distance threshold, the AMF determines the location information that is of the aircraft and that is reported by the aircraft as the location information of the aircraft. Alternatively, the AMF network element determines an intermediate location between the location indicated by the location information that is of the aircraft and that is sent by the aircraft and the location indicated by the location information that is of the aircraft and that is obtained through positioning by the AMF network element, and determines that information used to indicate the intermediate location is the location information of the aircraft.

A process in which the AMF network element determines whether the shortest distance between the aircraft and the no-fly zone is less than or equal to the first preset value may be implemented in a plurality of manners. The following uses examples to describe some manners.

In a first example, the information about the no-fly zone that is obtained by the AMF network element in step 301 may include the network identifier of the no-fly zone, the network identifier of the no-fly zone includes an identifier of at least one cell, and the at least one cell may be referred to as at least one cell corresponding to the no-fly zone. The AMF network element determines, based on the identifier of the at least one cell corresponding to the no-fly zone, a center point of a coverage area of each cell corresponding to the no-fly zone. Then, the AMF network element may determine, based on the location information of the aircraft and the center point of the coverage area of each cell corresponding to the no-fly zone, a distance between the aircraft and the center point of the coverage area of each cell corresponding to the no-fly zone, and compare the distance with the first preset value. When a distance between the aircraft and a center point of a coverage area of any cell corresponding to the no-fly zone is less than or equal to the first preset value, the AMF network element determines that the shortest distance between the aircraft and the no-fly zone is less than or equal to the first preset value. When the distance between the aircraft and the center point of the coverage area of each cell corresponding to the no-fly zone is greater than the first preset value, the AMF network element determines that the shortest distance between the aircraft and the no-fly zone is greater than the first preset value. For example, as shown in FIG. 4, it is assumed that the aircraft is located at a point A. Network identifiers of the no-fly zone include an identifier of a cell 1 and an identifier of a cell 2. A center point of a coverage area of the cell 1 is a point B, and a center point of a coverage area of the cell 2 is a point C. If a distance between the point A and the point B is 20 meters, a distance between the point A and the point C is 25 meters, and the first preset value is 20 meters, the AMF network element may determine that a distance between the aircraft and the center point of the coverage area of the cell 1 is less than or equal to the first preset value.

In a second example, the information about the no-fly zone that is obtained by the AMF network element in step 301 may include the network identifier of the no-fly zone. The AMF network element may detect whether the aircraft accesses any cell corresponding to the no-fly zone. When the aircraft accesses the any cell corresponding to the no-fly zone, the AMF network element determines that the shortest distance between the aircraft and the no-fly zone is less than or equal to the first preset value. When the aircraft does not access the cell corresponding to the no-fly zone, the AMF network element may determine that the shortest distance between the aircraft and the no-fly zone is greater than the first preset value. It should be noted that a coverage area of a base station forms a cell, and that the aircraft accesses the cell means that the aircraft accesses a mobile communications network through the cell, or may mean that the aircraft is connected to the base station that provides the cell.

In a third example, the information about the no-fly zone that is obtained by the AMF network element in step 301 includes the geographical identifier of the no-fly zone. The AMF network element may convert the geographical identifier of the no-fly zone into the network identifier of the no-fly zone. Then, the AMF network element may determine, based on the network identifier of the no-fly zone, whether the shortest distance between the aircraft and the no-fly zone is less than or equal to the first preset value. In addition, for a process in which the AMF network element may determine, based on the network identifier of the no-fly zone, whether the shortest distance between the aircraft and the no-fly zone is less than or equal to the first preset value, refer to the second example and the first example.

In a fourth example, the information about the no-fly zone that is obtained by the AMF network element in step 301 includes the geographical identifier of the no-fly zone. The AMF network element may directly determine an edge location closest to the aircraft in the no-fly zone based on the geographical identifier of the no-fly zone, and then the AMF network element may determine whether a distance between a location of the aircraft and the edge location is less than or equal to the first preset value. When the distance between the edge location and the location of the aircraft is less than or equal to the first preset value, the AMF network element may determine that the shortest distance between the aircraft and the no-fly zone is less than or equal to the first preset value. When the distance between the edge location and the location of the aircraft is greater than the first preset value, the AMF network element may determine that the shortest distance between the aircraft and the no-fly zone is greater than the first preset value.

It should be further noted that the AMF network element may determine in real time whether the shortest distance between the aircraft and the no-fly zone is less than or equal to the first preset value. Alternatively, the AMF network element may periodically determine whether the shortest distance between the aircraft and the no-fly zone is less than or equal to the first preset value. Alternatively, the AMF network element may determine, each time the aircraft accesses a cell, whether the shortest distance between the aircraft and the no-fly zone is less than or equal to the first preset value. Alternatively, the AMF network element may determine, each time the aircraft accesses a cell corresponding to a no-fly zone, whether the shortest distance between the aircraft and the no-fly zone is less than or equal to the first preset value. This is not limited.

Optionally, in an implementation scenario of the foregoing embodiment, the method further includes: The AMF network element sends the network identifier or the geographical identifier of the no-fly zone to the aircraft. The network identifier or the geographical identifier of the no-fly zone may be used by the aircraft to determine whether the aircraft approaches or is located in the no-fly zone, so that when determining that the shortest distance between the aircraft and the no-fly zone is less than or equal to the first preset value, the aircraft deregisters, enters a restricted service state, or sends the location information of the aircraft to the control apparatus or the AMF network element.

It should be noted that after the aircraft receives the control instruction sent by the control apparatus, if the aircraft deregisters (that is, the aircraft does not register with a network, and the AMF has no valid location information or routing information of the aircraft, and therefore the aircraft is unreachable to the AMF), the aircraft lands in place or returns (that is, returns along a same route). This can prevent the aircraft from flying in the no-fly zone. The aircraft sends the location information of the aircraft to the AMF network element, so that the AMF network element can report, to the control apparatus based on the location information sent by the aircraft, the location information that is of the aircraft and that is obtained through positioning by the AMF network element, and the control apparatus sends the control instruction to the aircraft based on the location information sent by the AMF network element. Optionally, the aircraft sends the location information of the aircraft to the AMF network element, so that the AMF network element can perform a deregistration procedure on the aircraft. The aircraft sends the location information of the aircraft to the control apparatus, so that the control apparatus can determine whether the aircraft approaches or is located in the no-fly zone, and the control apparatus can send the control instruction to the aircraft in a timely manner, to prohibit the aircraft from flying in the no-fly zone.

When the aircraft enters the restricted service state, the aircraft stops processing information from another apparatus different from an apparatus corresponding to identification information. This can prevent the aircraft from being controlled by the another apparatus different from the apparatus corresponding to the identification information, so that when the aircraft enters the restricted service state, the aircraft can be controlled only by the apparatus corresponding to the identification information. Alternatively, when the aircraft enters the restricted service state, the aircraft stops sending information to any apparatus or the aircraft stops sending information to the another apparatus different from the apparatus corresponding to the identification information. This can prevent the aircraft from sending, to the another apparatus different from the control apparatus in the no-fly zone or near the no-fly zone, information that needs to be kept secret from the another apparatus, and prevent information leakage.

Optionally, in an implementation scenario of the foregoing embodiment, the method further includes: The AMF network element sends identification information to the aircraft, where the identification information is used to identify an apparatus with which the aircraft is allowed to communicate. The AMF network element sends second indication information and/or third indication information to the aircraft. The second indication information is used to indicate the aircraft to stop, when the shortest distance between the aircraft and the no-fly zone is less than or equal to the first preset value and the aircraft is in the restricted service state, processing information from another apparatus different from the apparatus corresponding to the identification information; and the third indication information is used to indicate the aircraft to stop, when the shortest distance between the aircraft and the no-fly zone is less than or equal to the first preset value and the aircraft is in the restricted service state, sending information to the another apparatus different from the apparatus corresponding to the identification information.

Optionally, in the aircraft control method provided in this embodiment of this application, the no-fly zone may be updated. For example, when the information about the no-fly zone that is obtained by the AMF network element is updated, the AMF network element may re-determine, based on the location information of the aircraft and updated information about a no-fly zone, whether a shortest distance between the aircraft and the no-fly zone is less than or equal to the first preset value. The AMF network element may re-send reference information to the control apparatus when re-determining that the shortest distance between the aircraft and the no-fly zone is less than or equal to the first preset value.

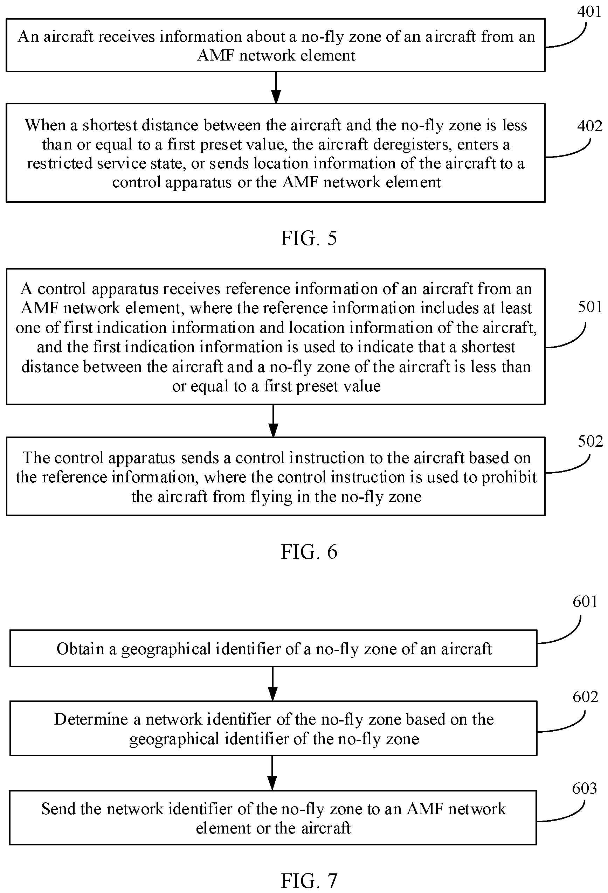

FIG. 5 is a flowchart of a second aircraft control method according to an embodiment of this application. The aircraft control method may be performed by the aircraft in the communications system shown in FIG. 1, or may be performed by another apparatus with a similar function. This is not limited. Details are as follows:
Step 401: The aircraft receives information about a no-fly zone of the aircraft from an AMF network element.

For the information about the no-fly zone, refer to the related descriptions in the embodiment shown in FIG. 3. Details are not described again.

Step 402: When a shortest distance between the aircraft and the no-fly zone is less than or equal to a first preset value, the aircraft deregisters, enters a restricted service state, or sends location information of the aircraft to a control apparatus or the AMF network element.

For a process in which the aircraft deregisters, enters the restricted service state, or sends the location information of the aircraft to the control apparatus or the AMF network element, refer to the related descriptions in the embodiment shown in FIG. 3. Details are not described again.

According to the method provided in the foregoing embodiment, the AMF network element delivers the information about the no-fly zone to the aircraft, and when the shortest distance between the aircraft and the no-fly zone is less than or equal to the first preset value, the aircraft can deregister, enter the restricted service state, or send the location information of the aircraft to the AMF network element or the control apparatus, to prohibit the aircraft from flying in the no-fly zone, thereby reducing a security risk. In this way, geofences do not need to be installed on an edge of the no-fly zone, thereby simplifying an advance preparation process and reducing costs.

Optionally, before step 402, the aircraft control method may further include: The aircraft receives identification information from the AMF network element, where the identification information is used to identify an apparatus with which the aircraft is allowed to communicate. The aircraft receives second indication information from the AMF network element. For the second indication information, refer to the related descriptions in the embodiment shown in FIG. 3. Details are not described again. That the aircraft enters a restricted service state includes: The aircraft stops, based on the second indication information, processing information from another apparatus. Optionally, the aircraft control method may further include: The aircraft receives third indication information from the AMF network element. For the third indication information, refer to the related descriptions in the embodiment shown in FIG. 3. Details are not described again. That the aircraft enters a restricted service state includes: The aircraft stops, based on the third indication information, sending information to another apparatus.

Optionally, before step 402, the aircraft control method may further include: The aircraft receives identification information from the AMF network element, where the identification information is used to identify an apparatus with which the aircraft is allowed to communicate. The aircraft receives third indication information from the AMF network element. For the third indication information, refer to the related descriptions in the embodiment shown in FIG. 3. Details are not described again. That the aircraft enters a restricted service state includes: The aircraft stops, based on the third indication information, sending information to another apparatus.

Optionally, before step 402, the aircraft control method may further include: The aircraft determines, based on the information about the no-fly zone, that the shortest distance between the aircraft and the no-fly zone is less than or equal to the first preset value.

In a first example, the information about the no-fly zone that is received by the aircraft in step 401 includes the network identifier of the no-fly zone, and the network identifier includes an identifier of at least one cell. The aircraft may detect whether the aircraft accesses any one of the at least one cell. When the aircraft accesses the any one of the at least one cell, the aircraft may determine that the shortest distance between the aircraft and the no-fly zone is less than or equal to the first preset value. When the aircraft does not access the at least one cell, the aircraft may determine that the shortest distance between the aircraft and the no-fly zone is greater than the first preset value.

In a second example, the information about the no-fly zone that is received by the aircraft in step 401 includes the network identifier of the no-fly zone. The aircraft may measure a radio signal strength of each of the at least one cell. It should be noted that the radio signal strength that is of the cell and that is measured by the aircraft is negatively correlated to a distance between the aircraft and the cell. To be specific, when the aircraft is closer to the cell, the radio signal strength that is of the cell and that is measured by the aircraft is stronger. When the aircraft is farther away from the cell, the radio signal strength that is of the cell and that is measured by the aircraft is weaker. Therefore, the aircraft may determine a distance between the aircraft and each cell based on a measured radio signal strength of each cell. When the aircraft determines that the radio signal strength of the any one of the at least one cell is greater than or equal to a second preset value, the aircraft may determine that the shortest distance between the aircraft and the no-fly zone is less than or equal to the first preset value. When the aircraft determines that the radio signal strength of each of the at least one cell is less than the second preset value, the aircraft may determine that the shortest distance between the aircraft and the no-fly zone is greater than the first preset value.

In a third example, the information about the no-fly zone that is received by the aircraft in step 401 may include the geographical identifier of the no-fly zone. In this case, the aircraft may directly determine an edge location closest to the aircraft in the no-fly zone based on the geographical identifier of the no-fly zone, and then the aircraft may determine whether a distance between a location of the aircraft and the edge location is less than or equal to the first preset value. When the distance between the edge location and the location of the aircraft is less than or equal to the first preset value, the aircraft may determine that the shortest distance between the aircraft and the no-fly zone is less than or equal to the first preset value.

It should be noted that the aircraft may determine in real time whether the shortest distance between the aircraft and the no-fly zone is less than or equal to the first preset value. Alternatively, the aircraft may periodically determine whether the shortest distance between the aircraft and the no-fly zone is less than or equal to the first preset value. Alternatively, the aircraft may determine, each time registering with a cell, whether the shortest distance between the aircraft and the no-fly zone is less than or equal to the first preset value. Alternatively, the aircraft may determine, each time registering with each of the at least one cell, whether the shortest distance between the aircraft and the no-fly zone is less than or equal to the first preset value. This is not limited.

Optionally, in the aircraft control method provided in this embodiment of this application, the no-fly zone may be updated. For example, when the information about the no-fly zone that is received by the aircraft from the AMF network element is updated, the aircraft may re-determine, based on the location information of the aircraft and the updated information about the no-fly zone, whether the shortest distance between the aircraft and the no-fly zone is less than or equal to the first preset value. When re-determining that the shortest distance between the aircraft and the no-fly zone is less than or equal to the first preset value, the aircraft may deregister, enter the restricted service state, or send the location information of the aircraft to the control apparatus or the AMF network element.

Optionally, the aircraft control method may further include: The aircraft receives a control instruction from the control apparatus, and then the aircraft executes the control instruction. For example, when the control instruction is a hover instruction, the aircraft may hover according to the control instruction. In this case, the aircraft does not enter the no-fly zone, and does not fly in a direction close to the no-fly zone. Therefore, the aircraft can be prevented from flying in the no-fly zone. When the control instruction is a return instruction, the aircraft may return according to the control instruction. In this case, the aircraft flies in a direction away from the no-fly zone. Therefore, the aircraft can be prevented from flying in the no-fly zone. When the control instruction is an in-place landing instruction, the aircraft may land in place according to the control instruction. In this case, the aircraft is not in a flight state. Therefore, the aircraft can also be prevented from flying in the no-fly zone. When the control instruction is an instruction for flying along a specified route in a direction away from the no-fly zone, the aircraft may fly along the specified route according to the control instruction. In this case, the aircraft flies in a direction away from the no-fly zone. Therefore, the aircraft can be prevented from flying in the no-fly zone.

FIG. 6 is a flowchart of a third aircraft control method according to an embodiment of this application. The aircraft control method may be performed by a control apparatus in the communications system shown in FIG. 1, or may be performed by another apparatus with a similar function. This is not limited. Details are as follows:

Step 501: The control apparatus receives reference information of an aircraft from an AMF network element.

For the reference information, refer to the related descriptions in the embodiment shown in FIG. 3.

Step 502: The control apparatus sends a control instruction to the aircraft based on the reference information.

The control instruction is used to prohibit the aircraft from flying in the no-fly zone.

If the control apparatus receives the reference information that is of the aircraft and that is sent by the AMF network element, the control apparatus may determine that the current aircraft has entered the no-fly zone of the aircraft or is about to enter the no-fly zone of the aircraft. In this case, the control apparatus may directly send the control instruction to the aircraft. For the control instruction, refer to the related descriptions in the embodiment shown in FIG. 3.

According to the method provided in the foregoing embodiment, the AMF network element sends the reference information to the control apparatus, to trigger the control apparatus to send, to the aircraft, the control instruction used to prohibit the aircraft from flying in the no-fly zone, so as to prohibit the aircraft from flying in the no-fly zone, thereby reducing a security risk. In this way, geofences do not need to be installed on an edge of the no-fly zone, thereby simplifying an advance preparation process and reducing costs.

Optionally, the reference information includes the location information of the aircraft. In step 502, the control apparatus may send the control instruction to the aircraft based on the location information of the aircraft in the reference information and a geographical identifier of the no-fly zone. For example, the control apparatus may re-determine, based on the location information of the aircraft in the reference information and the geographical identifier of the no-fly zone, whether the shortest distance between the aircraft and the no-fly zone is less than or equal to the first preset value. The control apparatus sends the control instruction to the aircraft only when re-determining that the shortest distance between the aircraft and the no-fly zone is less than or equal to the first preset value, to prevent the AMF network element from incorrectly determining whether the shortest distance between the aircraft and the no-fly zone is less than or equal to the first preset value. This is not limited.

For example, when the aircraft does not enter the no-fly zone, the control apparatus may send, to the aircraft, a hover instruction, a return instruction, an in-place landing instruction, or an instruction for flying along a specified route in a direction away from the no-fly zone. When the aircraft enters the no-fly zone, the control apparatus may send, to the aircraft, a return instruction, an in-place landing instruction, or an instruction for flying along a specified route in a direction away from the no-fly zone.

Optionally, the aircraft control method may further include: The control apparatus receives location information from the aircraft. For example, the aircraft may periodically send the location information of the aircraft to the control apparatus. Alternatively, after the AMF network element receives the identifier of the no-fly zone, the AMF network element may send the identifier of the no-fly zone to the aircraft, so that the aircraft can report the location information of the aircraft to the control apparatus when determining, based on the identifier of the no-fly zone, that the shortest distance between the aircraft and the no-fly zone is less than or equal to the first preset value. In this case, that the control apparatus sends the control instruction to the aircraft based on the location information of the aircraft in the reference information and a geographical identifier of the no-fly zone includes: The control apparatus determines, based on the location information of the aircraft in the reference information, the location information from the aircraft, and the geographical identifier of the no-fly zone, whether the shortest distance between the aircraft and the no-fly zone is less than or equal to the first preset value. The control apparatus sends the control instruction to the aircraft when the shortest distance between the aircraft and the no-fly zone is less than or equal to the first preset value.

That the control apparatus determines, based on the location information of the aircraft in the reference information, the location information from the aircraft, and the geographical identifier of the no-fly zone, whether the shortest distance between the aircraft and the no-fly zone is less than or equal to the first preset value may include: The control apparatus determines the location information of the aircraft based on the location information of the aircraft in the reference information and the location information from the aircraft. In addition, for the process, refer to the process in which the AMF network element determines the location information of the aircraft based on the location information determined by the AMF network element and the location information sent by the aircraft in the embodiment shown in FIG. 3. Details are not described herein again. Then, the control apparatus may determine, based on the determined location information of the aircraft and the geographical identifier of the no-fly zone, whether the shortest distance between the aircraft and the no-fly zone is less than or equal to the first preset value.

Optionally, the aircraft control method may further include: The control apparatus sends the geographical identifier of the no-fly zone to the AMF network element, a PCF network element, or a UDM network element. Optionally, the geographical identifier of the no-fly zone may be a geographical identifier obtained by the control apparatus based on a trigger operation performed by a user of the control apparatus on the control apparatus, for example, a geographical identifier entered by the user on the control apparatus, or a geographical identifier selected by the user from a plurality of geographical identifiers preset in the control apparatus. Optionally, the geographical identifier of the no-fly zone may alternatively be a geographical identifier received by the control apparatus from another apparatus. This is not limited. After obtaining the geographical identifier of the no-fly zone, the control apparatus may send the geographical identifier to the AMF network element, the PCF network element, or the UDM network element, so that the AMF network element, the PCF network element, or the UDM network element can determine a network identifier of the no-fly zone based on the geographical identifier, and deliver the network identifier to the aircraft or the AMF network element (for example, the AMF network element delivers the network identifier to the aircraft, and the PCF network element and the UDM network element deliver the network identifier to the AMF network element). Therefore, the AMF network element and the aircraft each can monitor, based on the network identifier, whether the shortest distance between the aircraft and the no-fly zone is less than the first preset value, and perform a corresponding operation when the shortest distance between the aircraft and the no-fly zone is less than the first preset value, to prohibit the aircraft from flying in the no-fly zone.

Optionally, in the aircraft control method provided in this embodiment of this application, the no-fly zone may be updated. For example, when the no-fly zone is updated, the control apparatus may send a geographical identifier of an updated no-fly zone to the AMF network element, the PCF network element, or the UDM network element.

FIG. 7 is a flowchart of a fourth aircraft control method according to an embodiment of this application. The aircraft control method may be performed by the PCF network element, the UDM network element, or the AMF network element in the communications system shown in FIG. 1, or may be performed by another network element with a similar function. This is not limited. Details are as follows:
Step 601: Obtain a geographical identifier of a no-fly zone of an aircraft.

A network element configured to perform the method shown in FIG. 7 may obtain the geographical identifier of the no-fly zone of the aircraft. Optionally, the geographical identifier of the no-fly zone may be a geographical identifier provided by a control apparatus. Each of the PCF network element, the UDM network element, or the AMF network element may directly receive the geographical identifier from the control apparatus, or may receive a geographical identifier sent by another network element that is in the AMF network element, an NEF network element, the PCF network element, and the UDM network element and that is different from the network element configured to perform the method shown in FIG. 7. This is not limited.

Step 602: Determine a network identifier of the no-fly zone based on the geographical identifier of the no-fly zone.

Correspondences between geographical identifiers and network identifiers of a plurality of areas may be preset on the network element configured to perform the method shown in FIG. 7. A network identifier of each area may include an identifier of at least one cell (communication cell), and the area is within a coverage area identified by the at least one cell. For example, the correspondence may be shown in Table 1. Network identifiers corresponding to a geographical identifier D 1 of an area Q 1 include cell identifiers X11 and X12, a network identifier corresponding to a geographical identifier D2 of an area Q2 includes a cell identifier X21, and network identifiers corresponding to a geographical identifier D3 of an area Q3 include cell identifiers X31, X32, and X33. It should be noted that the cell identifiers summarized in the network identifiers of the areas may overlap, or may not overlap. This is not limited.

**Table 1**

| Geographical identifier | Network identifier |
|---|---|
| D1 | X11 and X12 |
| D2 | X21 |
| D3 | X31, X32, and X33 |

The network element configured to perform the method shown in FIG. 7 may query the preset correspondences between the geographical identifiers and the network identifiers of the plurality of areas based on the geographical identifier of the no-fly zone, to determine the network identifier corresponding to the geographical identifier of the no-fly zone in the correspondence. The cell identifier in the network identifier of the no-fly zone may be referred to as an identifier of a cell.

Step 603: Send the network identifier of the no-fly zone to the AMF network element or the aircraft.

If the network element configured to perform the method shown in FIG. 7 is the PCF network element or the UDM network element, after obtaining the network identifier of the no-fly zone, the PCF network element or the UDM network element may send the network identifier of the no-fly zone to the AMF network element. After obtaining the network identifier of the no-fly zone, the AMF network element may monitor, based on the network identifier of the no-fly zone, whether a shortest distance between the aircraft and the no-fly zone is less than a first preset value. When the shortest distance between the aircraft and the no-fly zone is less than or equal to the first preset value, the AMF network element can indicate the control apparatus to control the aircraft, to prohibit the aircraft from flying in the no-fly zone. In this way, geofences do not need to be installed on an edge of the no-fly zone, thereby simplifying an advance preparation process and reducing costs.

If the network element configured to perform the method shown in FIG. 7 is the AMF network element, after obtaining the network identifier of the no-fly zone, the AMF network element may send the network identifier of the no-fly zone to the aircraft. After obtaining the information about the no-fly zone, the aircraft can monitor whether the shortest distance between the aircraft and the no-fly zone is less than or equal to the first preset value. When the shortest distance between the aircraft and the no-fly zone is less than or equal to the first preset value, the aircraft can autonomously deregister to land in place or return; or the aircraft may send location information of the aircraft to the control apparatus or the AMF network element, to trigger the control apparatus to send a control instruction to the aircraft, so as to prohibit the aircraft from flying in the no-fly zone; or enter a restricted service state. In this way, geofences do not need to be installed on an edge of the no-fly zone, thereby simplifying an advance preparation process and reducing costs.

According to the method provided in the foregoing embodiment, the AMF network element, the PCF network element, or the UDM network element receives the geographical identifier of the no-fly zone from the control apparatus, converts the geographical identifier into the network identifier of the no-fly zone, and delivers the network identifier to the aircraft or the AMF network element, so that after receiving the network identifier, the aircraft or the AMF network element can monitor, based on the network identifier, whether the shortest distance between the aircraft and the no-fly zone is less than the first preset value, and send information to the control apparatus when the shortest distance between the aircraft and the no-fly zone is less than or equal to the first preset value, to trigger the control apparatus to control the aircraft in a timely manner. In this way, geofences do not need to be installed on an edge of the no-fly zone, thereby simplifying an advance preparation process and reducing costs.

Optionally, in the aircraft control method provided in this embodiment of this application, the no-fly zone may be updated. For example, when the AMF network element, the PCF network element, or the UDM network element obtains a geographical identifier of an updated no-fly zone, the AMF network element, the PCF network element, or the UDM network element may determine a network identifier of the updated no-fly zone based on the geographical identifier of the updated no-fly zone, and sends the network identifier of the updated no-fly zone to the AMF network element or the aircraft.

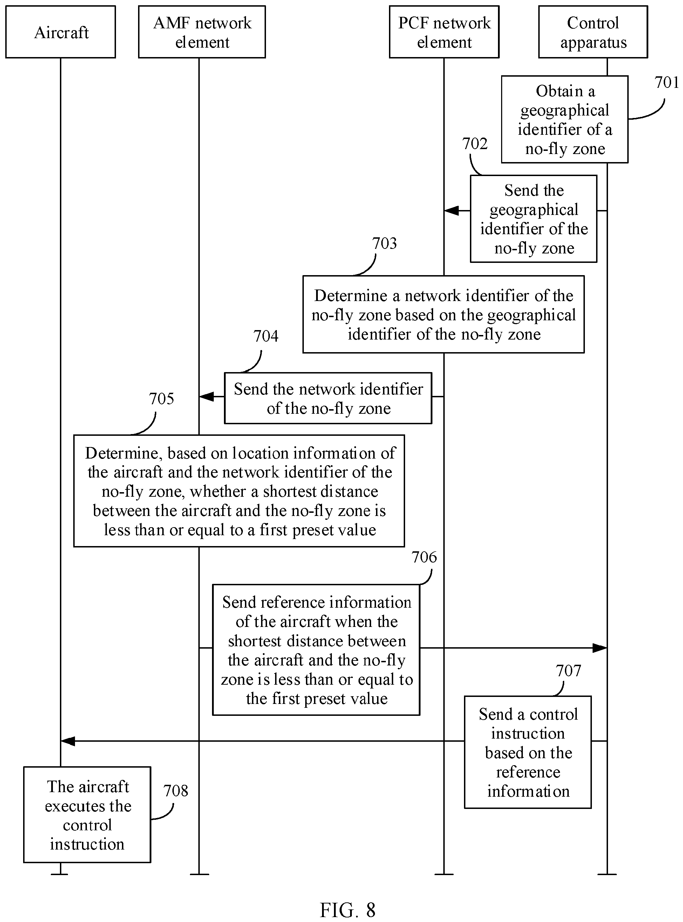

FIG. 8 is a flowchart of a fifth aircraft control method according to an embodiment of this application. The aircraft control method may be performed by a plurality of apparatuses in the communications system shown in FIG. 1. Details are as follows:
Step 701: A control apparatus obtains a geographical identifier of a no-fly zone.

Optionally, for the geographical identifier of the no-fly zone, refer to the related descriptions in the embodiment shown in FIG. 3. Details are not described herein again.

Step 702: The control apparatus sends the geographical identifier of the no-fly zone to a PCF network element.

Optionally, the control apparatus may send the geographical identifier of the no-fly zone to the PCF network element through a NEF network element. For example, the control apparatus may first send the geographical identifier of the no-fly zone to the NEF network element, and the NEF network element may forward the geographical identifier to the PCF network element after receiving the geographical identifier of the no-fly zone. In addition, after receiving the geographical identifier of the no-fly zone, the NEF network element may further send, to the control apparatus, feedback information indicating that the geographical identifier is received. It should be noted that the control apparatus may alternatively send the geographical identifier of the no-fly zone to the PCF network element in another manner. This is not limited.

Step 703: The PCF network element determines a network identifier of the no-fly zone based on the geographical identifier of the no-fly zone.

For step 703, refer to the related descriptions in the embodiment shown in FIG. 7. Details are not described herein again.

Step 704: The PCF network element sends the network identifier of the no-fly zone to an AMF network element.

After determining the network identifier of the no-fly zone, the PCF network element may send the network identifier of the no-fly zone to the AMF network element.

Step 705: The AMF network element determines, based on location information of an aircraft and the network identifier of the no-fly zone, whether a shortest distance between the aircraft and the no-fly zone is less than or equal to a first preset value.

If the shortest distance between the aircraft and the no-fly zone is less than or equal to the first preset value, the AMF network element performs step 706. If the shortest distance between the aircraft and the no-fly zone is greater than the first preset value, the AMF network element performs step 705. To be specific, the AMF network element re-determines whether the shortest distance between the aircraft and the no-fly zone is less than or equal to the first preset value. For step 705, refer to the related descriptions in the embodiment shown in FIG. 3. Details are not described herein again.

Step 706: The AMF network element sends reference information of the aircraft to the control apparatus, where the reference information includes at least one of first indication information and the location information of the aircraft, and the first indication information is used to indicate that the shortest distance between the aircraft and the no-fly zone of the aircraft is less than or equal to the first preset value.

For step 706, refer to the related descriptions in the embodiment shown in FIG. 3. Details are not described herein again.

Step 707: The control apparatus sends a control instruction to the aircraft based on the reference information, where the control instruction is used to prohibit the aircraft from flying in the no-fly zone.

For step 707, refer to the related descriptions in the embodiment shown in FIG. 6. Details are not described herein again.

Step 708: The aircraft executes the control instruction.

For step 708, refer to the related descriptions in the embodiment shown in FIG. 5. Details are not described herein again.

Optionally, when receiving the control instruction, the aircraft may further enter a restricted service state. For the restricted service state, refer to the related descriptions in the embodiment shown in FIG. 5. Details are not described herein again.

In conclusion, according to the aircraft control method provided in this embodiment of this application, the control apparatus delivers the information about the no-fly zone to the AMF network element, and the AMF network element can monitor whether the shortest distance between the aircraft and the no-fly zone is less than or equal to the first preset value. Therefore, when the shortest distance between the aircraft and the no-fly zone is less than or equal to the first preset value, the AMF network element can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

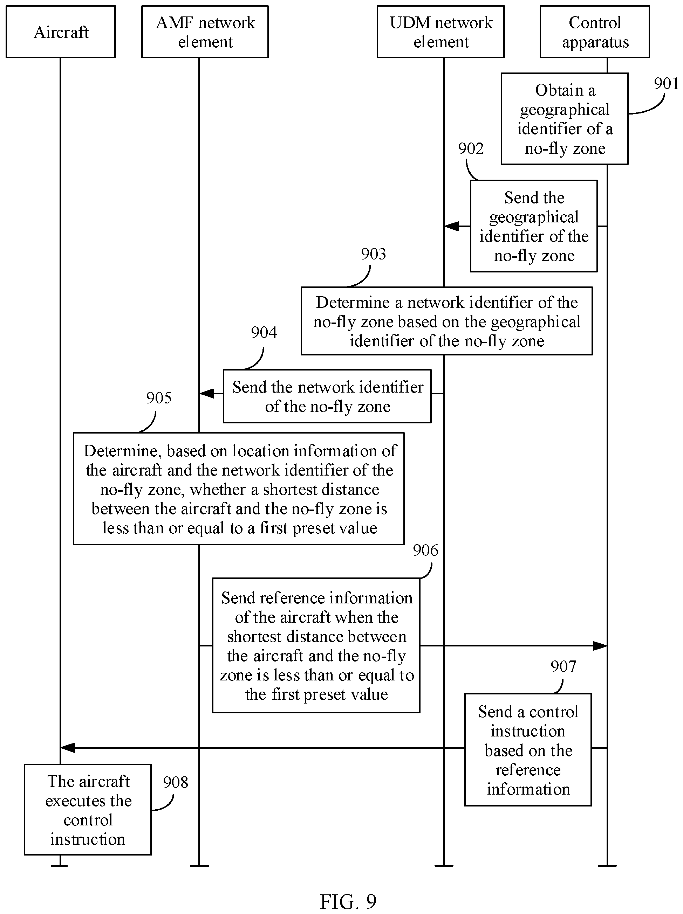

FIG. 9 is a flowchart of a sixth aircraft control method according to an embodiment of this application. The aircraft control method may be performed by a plurality of apparatuses in the communications system shown in FIG. 1. Details are as follows:
Step 901: A control apparatus obtains a geographical identifier of a no-fly zone.

For step 901, refer to step 701. Details are not described in this embodiment of this application.

Step 902: The control apparatus sends the geographical identifier of the no-fly zone to a UDM network element.

Optionally, the control apparatus may send the geographical identifier of the no-fly zone to the UDM network element through a NEF network element. For example, the control apparatus may first send the geographical identifier of the no-fly zone to the NEF network element, and the NEF network element may forward the geographical identifier to the UDM network element after receiving the geographical identifier of the no-fly zone. In addition, after receiving the geographical identifier of the no-fly zone, the NEF network element may further send, to the control apparatus, feedback information indicating that the geographical identifier is received. It should be noted that the control apparatus may alternatively send the geographical identifier of the no-fly zone to the UDM network element in another manner. This is not limited.

Step 903: The UDM network element determines a network identifier of the no-fly zone based on the geographical identifier of the no-fly zone. For a process in which the UDM network element determines the network identifier of the no-fly zone in step 903, refer to the process in which the PCF network element determines the network identifier of the no-fly zone in step 703. Details are not described in this embodiment of this application.

Step 904: The UDM network element sends the network identifier of the no-fly zone to an AMF network element.

Step 905: The AMF network element determines, based on location information of an aircraft and the network identifier of the no-fly zone, whether a shortest distance between the aircraft and the no-fly zone is less than or equal to a first preset value.

If the shortest distance between the aircraft and the no-fly zone is less than or equal to the first preset value, the AMF network element performs step 906. If the shortest distance between the aircraft and the no-fly zone is greater than the first preset value, the AMF network element performs step 905.

For step 905, refer to step 705. Details are not described in this embodiment of this application.

Step 906: The AMF network element sends reference information of the aircraft to the control apparatus, where the reference information includes at least one of first indication information and the location information of the aircraft, and the first indication information is used to indicate that the shortest distance between the aircraft and the no-fly zone of the aircraft is less than or equal to the first preset value.

For step 906, refer to step 706. Details are not described in this embodiment of this application.

Step 907: The control apparatus sends a control instruction to the aircraft based on the reference information, where the control instruction is used to prohibit the aircraft from flying in the no-fly zone.

For step 907, refer to step 707. Details are not described in this embodiment of this application.

Step 908: The aircraft executes the control instruction.

For step 908, refer to step 708. Details are not described in this embodiment of this application.

Optionally, when receiving the control instruction, the aircraft may further enter a restricted service state. For explanations of entering the restricted service state by the aircraft, refer to the explanations of entering the restricted service state by the aircraft in the embodiment shown in FIG. 8. Details are not described in this embodiment of this application.

In conclusion, according to the aircraft control method provided in this embodiment of this application, the control apparatus delivers the information about the no-fly zone to the AMF network element, and the AMF network element can monitor whether the shortest distance between the aircraft and the no-fly zone is less than or equal to the first preset value. Therefore, when the shortest distance between the aircraft and the no-fly zone is less than or equal to the first preset value, the AMF network element can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

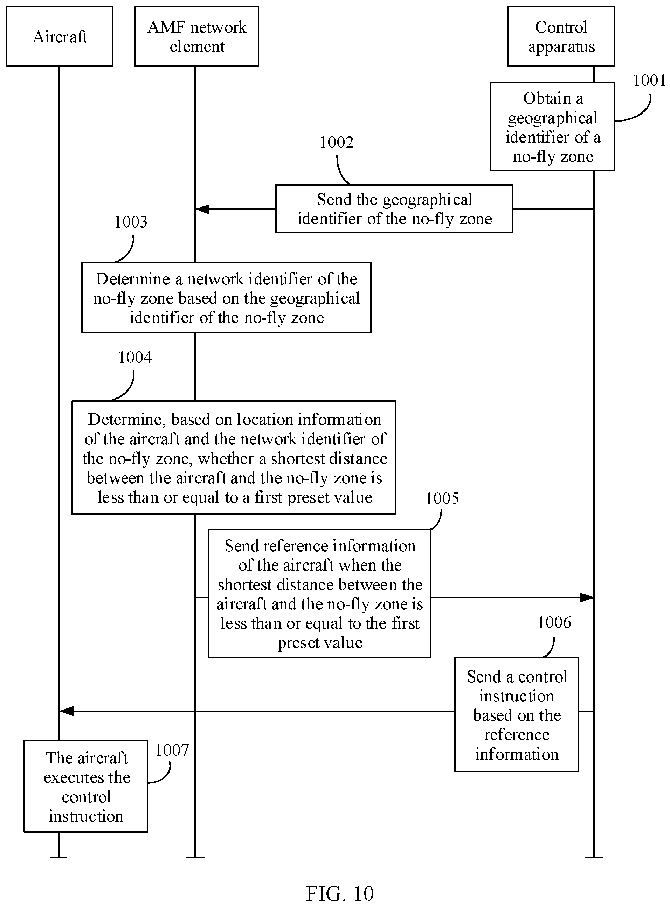

FIG. 10 is a flowchart of a seventh aircraft control method according to an embodiment of this application. The aircraft control method may be performed by a plurality of apparatuses in the communications system shown in FIG. 1. Details are as follows:
Step 1001: A control apparatus obtains a geographical identifier of a no-fly zone.

For step 1001, refer to step 701. Details are not described in this embodiment of this application.

Step 1002: The control apparatus sends the geographical identifier of the no-fly zone to an AMF network element.

For step 1002, refer to step 702. However, a difference between step 1002 and step 702 lies in that in step 1002, the control apparatus sends the geographical identifier of the no-fly zone to the AMF network element, instead of sending the geographical identifier of the no-fly zone to the PCF network element.

Optionally, in step 1002, the control apparatus may send the geographical identifier of the no-fly zone to the AMF network element sequentially through an NEF network element and the PCF network element. In addition, after receiving the geographical identifier of the no-fly zone, each apparatus in the NEF network element and the PCF network element may forward the geographical identifier to another apparatus, and may further send, to the control apparatus, feedback information indicating that the geographical identifier is received. It should be noted that the control apparatus may alternatively send the geographical identifier of the no-fly zone to the AMF network element in another manner. This is not limited.

Optionally, in step 1002, the control apparatus may alternatively send the geographical identifier of the no-fly zone to the AMF network element sequentially through an NEF network element and a UDM network element. In step 1002, the control apparatus may alternatively send the geographical identifier of the no-fly zone to the AMF network element through the PCF network element. In step 1002, the control apparatus may alternatively send the geographical identifier of the no-fly zone to the AMF network element through the UDM network element. In step 1002, the control apparatus may alternatively send the geographical identifier of the no-fly zone to the AMF network element through the NEF network element. This is not limited.

Step 1003: The AMF network element determines a network identifier of the no-fly zone based on the geographical identifier of the no-fly zone.

For a process in which the AMF network element determines the network identifier of the no-fly zone in step 1003, refer to the process in which the PCF network element determines the network identifier of the no-fly zone in step 703. Details are not described in this embodiment of this application.

Step 1004: The AMF network element determines, based on location information of an aircraft and the network identifier of the no-fly zone, whether a shortest distance between the aircraft and the no-fly zone is less than or equal to a first preset value.

If the shortest distance between the aircraft and the no-fly zone is less than or equal to the first preset value, the AMF network element performs step 1005. If the shortest distance between the aircraft and the no-fly zone is greater than the first preset value, the AMF network element performs step 1004.

For step 1004, refer to step 705. Details are not described in this embodiment of this application.

Step 1005: The AMF network element sends reference information of the aircraft to the control apparatus, where the reference information includes at least one of first indication information and the location information of the aircraft, and the first indication information is used to indicate that the shortest distance between the aircraft and the no-fly zone of the aircraft is less than or equal to the first preset value.

For step 1005, refer to step 706. Details are not described in this embodiment of this application.

Step 1006: The control apparatus sends a control instruction to the aircraft based on the reference information, where the control instruction is used to prohibit the aircraft from flying in the no-fly zone.

For step 1006, refer to step 707. Details are not described in this embodiment of this application.

Step 1007: The aircraft executes the control instruction.

For step 1007, refer to step 708. Details are not described in this embodiment of this application.

Optionally, when receiving the control instruction, the aircraft may further enter a restricted service state. For explanations of entering the restricted service state by the aircraft, refer to the explanations of entering the restricted service state by the aircraft in the embodiment shown in FIG. 8. Details are not described in this embodiment of this application.

In conclusion, according to the aircraft control method provided in this embodiment of this application, the control apparatus delivers the information about the no-fly zone to the AMF network element, and the AMF network element can monitor whether the shortest distance between the aircraft and the no-fly zone is less than or equal to the first preset value. Therefore, when the shortest distance between the aircraft and the no-fly zone is less than or equal to the first preset value, the AMF network element can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

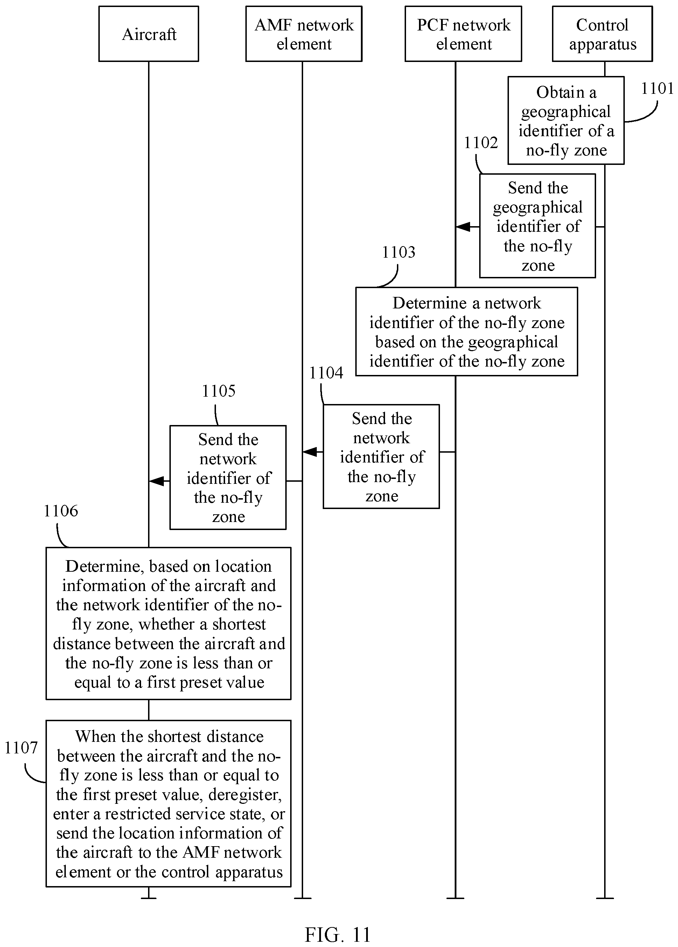

FIG. 11 is a flowchart of an eighth aircraft control method according to an embodiment of this application. The aircraft control method may be performed by a plurality of apparatuses in the communications system shown in FIG. 1. Details are as follows:
Step 1101: A control apparatus obtains a geographical identifier of a no-fly zone.

For step 1101, refer to step 701. Details are not described in this embodiment of this application.

Step 1102: The control apparatus sends the geographical identifier of the no-fly zone to a PCF network element.

For step 1102, refer to step 702. Details are not described in this embodiment of this application.

Step 1103: The PCF network element determines a network identifier of the no-fly zone based on the geographical identifier of the no-fly zone.

For step 1103, refer to step 703. Details are not described in this embodiment of this application.

Step 1104: The PCF network element sends the network identifier of the no-fly zone to an AMF network element.

For step 1104, refer to step 704. Details are not described in this embodiment of this application.

Step 1105: The AMF network element sends the network identifier of the no-fly zone to an aircraft.

In this embodiment of this application, after receiving the network identifier of the no-fly zone, the AMF network element may directly send the network identifier to the aircraft, so that the aircraft can perform, based on the network identifier of the no-fly zone, a subsequent step of determining whether a shortest distance between the aircraft and the no-fly zone is less than or equal to a first preset value.

Optionally, the AMF network element may send, to the aircraft, a tracking area list including an identifier of a cell in the network identifier of the no-fly zone, and send the network identifier of the no-fly zone to the aircraft. It should be noted that all cells in the tracking area list are cells in which the aircraft does not need to report a geographical location of the aircraft to the AMF network element.

Step 1106: The aircraft determines, based on the network identifier of the no-fly zone, whether the shortest distance between the aircraft and the no-fly zone is less than or equal to the first preset value. If the shortest distance between the aircraft and the no-fly zone is less than or equal to the first preset value, the aircraft performs step 1107. If the shortest distance between the aircraft and the no-fly zone is greater than the first preset value, the aircraft performs step 1106.

For step 1106, refer to the related descriptions in the embodiment shown in FIG. 5. Details are not described herein again.

Step 1107: The aircraft deregisters, enters a restricted service state, or sends location information of the aircraft to the AMF network element or the control apparatus.

For step 1107, refer to the related descriptions in the embodiment shown in FIG. 5. Details are not described herein again.

In conclusion, according to the aircraft control method provided in this embodiment of this application, the control apparatus delivers the information about the no-fly zone to the aircraft through the AMF network element, and the aircraft can monitor whether the shortest distance between the aircraft and the no-fly zone is less than or equal to the first preset value. Therefore, when the shortest distance between the aircraft and the no-fly zone is less than or equal to the first preset value, the aircraft can deregister, enter the restricted service state, or send the location information of the aircraft to the AMF network element or the control apparatus, to prohibit the aircraft from flying in the no-fly zone, thereby reducing a security risk. In this way, geofences do not need to be installed on an edge of the no-fly zone, thereby simplifying an advance preparation process and reducing costs.

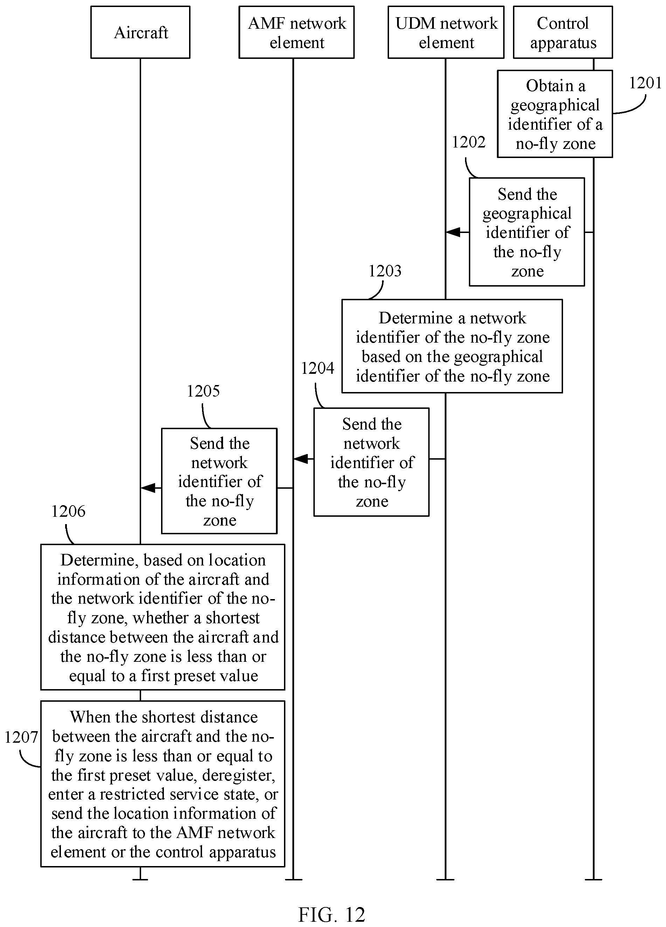

FIG. 12 is a flowchart of a ninth aircraft control method according to an embodiment of this application. The aircraft control method may be performed by a plurality of apparatuses in the communications system shown in FIG. 1. Details are as follows:
Step 1201: A control apparatus obtains a geographical identifier of a no-fly zone.

For step 1201, refer to step 901. Details are not described in this embodiment of this application.

Step 1202: The control apparatus sends the geographical identifier of the no-fly zone to a UDM network element.

For step 1202, refer to step 902. Details are not described in this embodiment of this application.

Step 1203: The UDM network element determines a network identifier of the no-fly zone based on the geographical identifier of the no-fly zone.

For step 1203, refer to step 903. Details are not described in this embodiment of this application.

Step 1204: The UDM network element sends the network identifier of the no-fly zone to an AMF network element.

For step 1204, refer to step 904. Details are not described in this embodiment of this application.

Step 1205: The AMF network element sends the network identifier of the no-fly zone to an aircraft.

For step 1205, refer to step 1105. Details are not described in this embodiment of this application.

Step 1206: The aircraft determines, based on the network identifier of the no-fly zone, whether the shortest distance between the aircraft and the no-fly zone is less than or equal to the first preset value.

If the shortest distance between the aircraft and the no-fly zone is less than or equal to the first preset value, the aircraft performs step 1207. If the shortest distance between the aircraft and the no-fly zone is greater than the first preset value, the aircraft performs step 1206.

For step 1206, refer to step 1106. Details are not described in this embodiment of this application.

Step 1207: The aircraft deregisters, enters a restricted service state, or sends location information of the aircraft to the AMF network element or the control apparatus.

For step 1207, refer to step 1107. Details are not described in this embodiment of this application.

In conclusion, according to the aircraft control method provided in this embodiment of this application, the control apparatus delivers the information about the no-fly zone to the aircraft through the AMF network element, and the aircraft can monitor whether the shortest distance between the aircraft and the no-fly zone is less than or equal to the first preset value. Therefore, when the shortest distance between the aircraft and the no-fly zone is less than or equal to the first preset value, the aircraft can deregister, enter the restricted service state, or send the location information of the aircraft to the AMF network element or the control apparatus, to prohibit the aircraft from flying in the no-fly zone, thereby reducing a security risk. In this way, geofences do not need to be installed on an edge of the no-fly zone, thereby simplifying an advance preparation process and reducing costs.

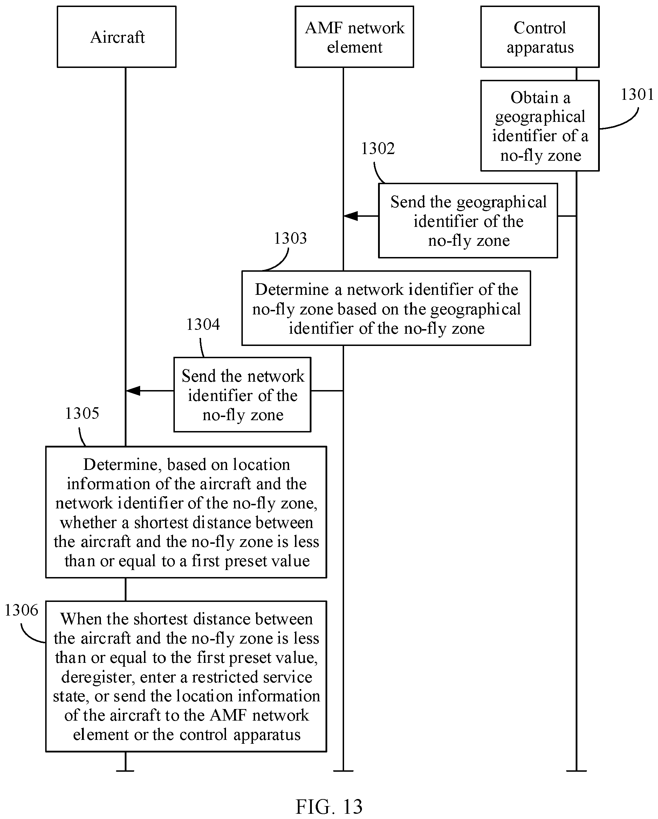

FIG. 13 is a flowchart of a tenth aircraft control method according to an embodiment of this application. The aircraft control method may be performed by a plurality of apparatuses in the communications system shown in FIG. 1. Details are as follows:
Step 1301: A control apparatus obtains a geographical identifier of a no-fly zone.

For step 1301, refer to step 1001. Details are not described in this embodiment of this application.

Step 1302: The control apparatus sends the geographical identifier of the no-fly zone to an AMF network element.

For step 1302, refer to step 1002. Details are not described in this embodiment of this application.

Step 1303: The AMF network element determines a network identifier of the no-fly zone based on the geographical identifier of the no-fly zone.

For step 1303, refer to step 1003. Details are not described in this embodiment of this application.

Step 1304: The AMF network element sends the network identifier of the no-fly zone to an aircraft.

For step 1304, refer to step 1105. Details are not described in this embodiment of this application.

Step 1305: The aircraft determines, based on the network identifier of the no-fly zone, whether the shortest distance between the aircraft and the no-fly zone is less than or equal to the first preset value.

If the shortest distance between the aircraft and the no-fly zone is less than or equal to the first preset value, the aircraft performs step 1306. If the shortest distance between the aircraft and the no-fly zone is greater than the first preset value, the aircraft performs step 1305.

For step 1305, refer to step 1106. Details are not described in this embodiment of this application.

Step 1306: The aircraft deregisters, enters a restricted service state, or sends location information of the aircraft to the AMF network element or the control apparatus.

For step 1306, refer to step 1107. Details are not described in this embodiment of this application.

In conclusion, according to the aircraft control method provided in this embodiment of this application, the control apparatus delivers the information about the no-fly zone to the aircraft through the AMF network element, and the aircraft can monitor whether the shortest distance between the aircraft and the no-fly zone is less than or equal to the first preset value. Therefore, when the shortest distance between the aircraft and the no-fly zone is less than or equal to the first preset value, the aircraft can deregister, enter the restricted service state, or send the location information of the aircraft to the AMF network element or the control apparatus, to prohibit the aircraft from flying in the no-fly zone, thereby reducing a security risk. In this way, geofences do not need to be installed on an edge of the no-fly zone, thereby simplifying an advance preparation process and reducing costs.

It should be noted that the geographical identifiers of the no-fly zones in the embodiments shown in FIG. 8, FIG. 9, FIG. 10, FIG. 11, FIG. 12, and FIG. 13 all come from the control apparatus. Optionally, the geographical identifiers of the no-fly zones in the embodiments shown in FIG. 8, FIG. 9, FIG. 10, FIG. 11, FIG. 12, and FIG. 13 may alternatively not come from the control apparatus. This is not limited.

For example, step 701 and step 702 in the embodiment shown in FIG. 8 may be replaced with: The PCF network element obtains the geographical identifier of the no-fly zone. Step 1101 and step 1102 in the embodiment shown in FIG. 11 may be replaced with: The PCF network element obtains the geographical identifier of the no-fly zone. The geographical identifier in each of the embodiments shown in FIG. 8 and FIG. 11 may be a geographical identifier obtained by the PCF network element based on a trigger operation performed by a user of the PCF network element on the PCF network element.

Step 901 and step 902 in the embodiment shown in FIG. 9 may be replaced with: The UDM network element obtains the geographical identifier of the no-fly zone. Step 1201 and step 1202 in the embodiment shown in FIG. 12 may be replaced with: The UDM network element obtains the geographical identifier of the no-fly zone. The geographical identifier in each of the embodiments shown in FIG. 9 and FIG. 12 may be a geographical identifier obtained by the UDM network element based on a trigger operation performed by a user of the UDM network element on the UDM network element.

Step 1001 and step 1002 in the embodiment shown in FIG. 10 may be replaced with: The AMF network element obtains the geographical identifier of the no-fly zone. Step 1301 and step 1302 in the embodiment shown in FIG. 13 may be replaced with: The AMF network element obtains the geographical identifier of the no-fly zone. The geographical identifier in each of the embodiments shown in FIG. 10 and FIG. 13 may be a geographical identifier obtained by the AMF network element based on a trigger operation performed by a user of the AMF network element on the AMF network element.

It should be further noted that in this embodiment of this application, when sending information to another apparatus, one apparatus may load the information onto other information (for example, information related to a registration procedure) for sending, or may separately send the information. This is not limited.

In addition, in the aircraft control methods shown in FIG. 8, FIG. 9, and FIG. 10, the AMF network element monitors whether the shortest distance between the aircraft and the no-fly zone is less than or equal to the first preset value. In the aircraft control methods shown in FIG. 11, FIG. 12, and FIG. 13, the aircraft monitors whether the shortest distance between the aircraft and the no-fly zone is less than or equal to the first preset value. Optionally, the method shown in any one of FIG. 8, FIG. 9, and FIG. 10 may be combined with the method shown in any one of FIG. 11, FIG. 12, and FIG. 13. The AMF network element and the aircraft may alternatively monitor whether the shortest distance between the aircraft and the no-fly zone is less than or equal to the first preset value. This is not limited.

To be specific, after obtaining the network identifier of the no-fly zone, the AMF network element needs to monitor, based on the network identifier of the no-fly zone, whether the shortest distance between the aircraft and the no-fly zone is less than or equal to the first preset value, and the AMF network element further needs to deliver the network identifier of the no-fly zone to the aircraft, so that the aircraft can monitor, based on the network identifier of the no-fly zone, whether the shortest distance between the aircraft and the no-fly zone is less than or equal to the first preset value. When the aircraft monitors that the shortest distance between the aircraft and the no-fly zone is less than or equal to the first preset value, the aircraft may perform deregistration. When the AMF network element monitors that the shortest distance between the aircraft and the no-fly zone is less than or equal to the first preset value, the AMF network element reports the reference information of the aircraft to the control apparatus, so that the control apparatus can deliver the control instruction to the aircraft based on the reference information. The aircraft may determine, according to the received control instruction based on a value relationship between the shortest distance and the first preset value, whether deregistration needs to be performed.

In the aircraft control methods shown in FIG. 8, FIG. 9, and FIG. 10, the AMF network element in a control layer apparatus monitors the shortest distance between the aircraft and the no-fly zone, and an effect of monitoring the aircraft by the control layer apparatus is higher than reliability of self-monitoring of the aircraft. Therefore, the aircraft can be effectively prevented from flying in the no-fly zone.

In addition, in the aircraft control method provided in this embodiment of this application, the no-fly zone may be updated, so that the aircraft control method can always be used to control the aircraft to be prohibited from flying in the latest no-fly zone, and therefore timeliness of controlling the aircraft to be prohibited from flying in the no-fly zone is relatively high.

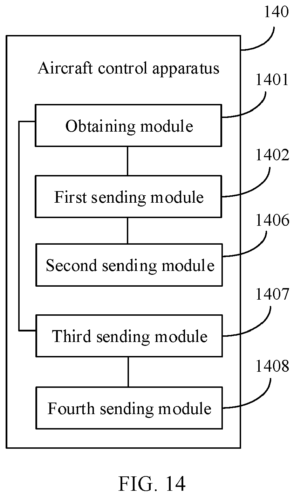

FIG. 14 is a schematic structural diagram of an aircraft control apparatus according to an embodiment of this application. The aircraft control apparatus may be located in the AMF network element in FIG. 1. This is not limited. In addition, the aircraft control apparatus may be configured to perform an action of the AMF network element in the foregoing method embodiment. As shown in FIG. 14, the aircraft control apparatus 140 may include:
an obtaining module 1401, configured to obtain information about a no-fly zone of an aircraft; and
a first sending module 1402, configured to send reference information to a control apparatus when a shortest distance between the aircraft and the no-fly zone is less than or equal to a first preset value.

The reference information includes at least one of first indication information and location information of the aircraft, and the first indication information is used to indicate that the shortest distance between the aircraft and the no-fly zone is less than or equal to the first preset value.

In conclusion, in the aircraft control apparatus provided in this embodiment of this application, after the obtaining module obtains the information about the no-fly zone, when the shortest distance between the aircraft and the no-fly zone is less than or equal to the first preset value, the first sending module can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

Optionally, the information about the no-fly zone includes a network identifier of the no-fly zone or a geographical identifier of the no-fly zone.

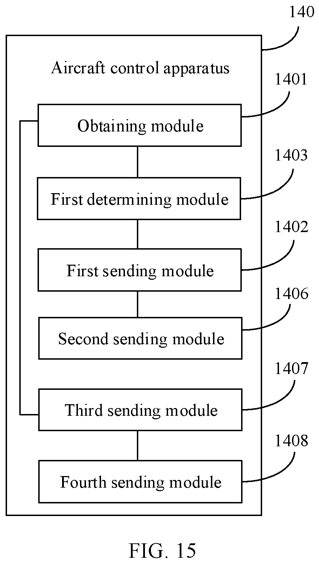

FIG. 15 is another schematic structural diagram of an aircraft control apparatus according to an embodiment of this application. As shown in FIG. 15, based on the control apparatus shown in FIG. 14, the aircraft control apparatus 140 may further include:
a first determining module 1403, configured to determine, based on the location information of the aircraft and the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. The first determining module 1403 is configured to:
determine, based on the location information of the aircraft, that a distance between the aircraft and a center point of a coverage area of any one of the at least one cell is less than or equal to the first preset value.

Optionally, the information about the no-fly zone includes the network identifier of the no-fly zone, and the network identifier of the no-fly zone includes an identifier of at least one cell.

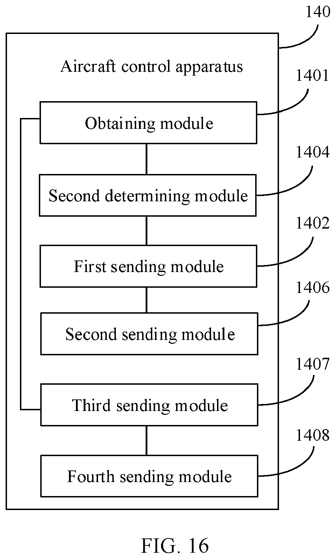

FIG. 16 is another schematic structural diagram of an aircraft control apparatus according to an embodiment of this application. As shown in FIG. 16, based on the control apparatus shown in FIG. 14, the aircraft control apparatus 140 may further include:
a second determining module 1406, configured to: when determining that the aircraft accesses any one of the at least one cell, determine that the shortest distance between the aircraft and the no-fly zone is less than or equal to the first preset value.

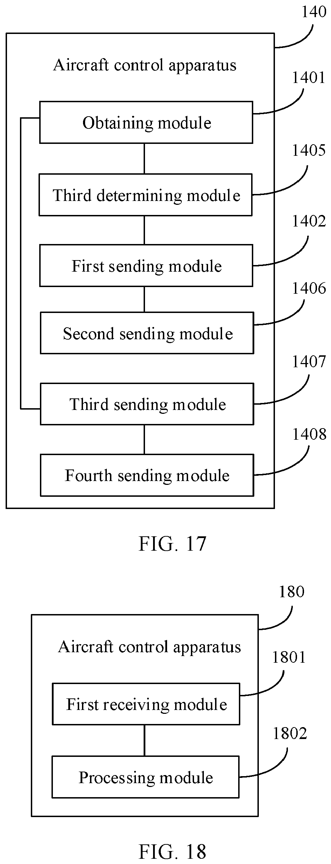

Optionally, the information about the no-fly zone includes the geographical identifier of the no-fly zone. FIG. 17 is another schematic structural diagram of an aircraft control apparatus according to an embodiment of this application. As shown in FIG. 17, based on FIG. 14, the aircraft control apparatus 140 may further include:
a third determining module 1407, configured to determine the network identifier of the no-fly zone based on the geographical identifier of the no-fly zone.

Optionally, the obtaining module 1401 may be configured to receive the geographical identifier of the no-fly zone from the control apparatus or a unified data management UDM network element.

Optionally, the information about the no-fly zone includes the network identifier of the no-fly zone. The obtaining module 1401 may be configured to receive the network identifier of the no-fly zone from a policy control function PCF network element or a UDM network element.

Optionally, the aircraft control apparatuses shown in FIG. 14, FIG. 15, FIG. 16, and FIG. 17 each may further include:
a second sending module 1406, configured to send the network identifier or the geographical identifier of the no-fly zone to the aircraft.

Optionally, the aircraft control apparatuses shown in FIG. 14, FIG. 15, FIG. 16, and FIG. 17 each may further include:
a third sending module 1407, configured to send identification information to the aircraft, where the identification information is used to identify an apparatus with which the aircraft is allowed to communicate; and
a fourth sending module 1408, configured to send second indication information and/or third indication information to the aircraft.

The second indication information is used to indicate the aircraft to stop, when the shortest distance between the aircraft and the no-fly zone is less than or equal to the first preset value and the aircraft is in a restricted service state, processing information from another apparatus different from the apparatus corresponding to the identification information.

The third indication information is used to indicate the aircraft to stop, when the shortest distance between the aircraft and the no-fly zone is less than or equal to the first preset value and the aircraft is in the restricted service state, sending information to the another apparatus different from the apparatus corresponding to the identification information.

Optionally, the location information of the aircraft is location information that is of the aircraft and that is reported by the aircraft to the AMF network element, or location information that is of the aircraft and that is obtained through positioning by the AMF network element, or location information determined by the AMF network element based on location information that is of the aircraft and that is reported by the aircraft to the AMF network element and location information that is of the aircraft and that is obtained through positioning by the AMF network element.

In conclusion, in the aircraft control apparatus provided in this embodiment of this application, after the obtaining module obtains the information about the no-fly zone, when the shortest distance between the aircraft and the no-fly zone is less than or equal to the first preset value, the first sending module can indicate the control apparatus to control the aircraft, to prohibit the aircraft from flying in the no-fly zone, thereby reducing a security risk. In this way, geofences do not need to be installed on an edge of the no-fly zone, thereby simplifying an advance preparation process and reducing costs.

FIG. 18 is a schematic structural diagram of another aircraft control apparatus according to an embodiment of this application. The control apparatus may be located in the aircraft in FIG. 1. This is not limited. The control apparatus may be configured to perform an action of the control apparatus in the foregoing method embodiment. As shown in FIG. 18, the aircraft control apparatus 180 may include:
a first receiving module 1801, configured to receive information about a no-fly zone of the aircraft from an AMF network element; and
a processing module 1802, configured to: when a shortest distance between the aircraft and the no-fly zone is less than or equal to a first preset value, deregister, enter a restricted service state, or send location information of the aircraft to a control apparatus or the AMF network element.

In conclusion, in the aircraft control apparatus provided in this embodiment of this application, the first receiving module can receive the information about the no-fly zone of the aircraft from the AMF network element, and the processing module can monitor whether the shortest distance between the aircraft and the no-fly zone is less than or equal to the first preset value. Therefore, when the shortest distance between the aircraft and the no-fly zone is less than or equal to the first preset value, the processing module can perform a corresponding operation, to prohibit the aircraft from flying in the no-fly zone, thereby reducing a security risk. In this way, geofences do not need to be installed on an edge of the no-fly zone, thereby simplifying an advance preparation process and reducing costs.

Optionally, the information about the no-fly zone includes a network identifier of the no-fly zone or a geographical identifier of the no-fly zone.

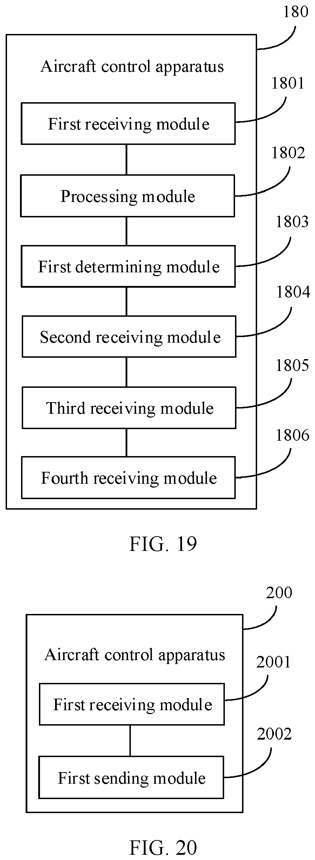

FIG. 19 is another schematic structural diagram of another aircraft control apparatus according to an embodiment of this application. As shown in FIG. 19, based on the control apparatus shown in FIG. 18, the aircraft control apparatus 180 may further include:
a first determining module 1803, configured to determine, based on the information about the no-fly zone, that the shortest distance between the aircraft and the no-fly zone is less than or equal to the first preset value.

Optionally, the information about the no-fly zone includes the network identifier of the no-fly zone, and the network identifier of the no-fly zone includes an identifier of at least one cell. The first determining module 1803 is configured to:
when determining that the aircraft accesses any one of the at least one cell, determine that the shortest distance between the aircraft and the no-fly zone is less than or equal to the first preset value; or
when determining that a radio signal strength of any one of the at least one cell is greater than or equal to a second preset value, determine that the shortest distance between the aircraft and the no-fly zone is less than or equal to the first preset value.

Optionally, the aircraft control apparatus further includes:
a second receiving module 1804, configured to receive identification information from the AMF network element, where the identification information is used to identify an apparatus with which the aircraft is allowed to communicate; and
a third receiving module 1805, configured to receive second indication information from the AMF network element, where the second indication information is used to indicate the aircraft to stop, when the shortest distance between the aircraft and the no-fly zone is less than or equal to the first preset value and the aircraft is in the restricted service state, processing information from another apparatus different from the apparatus corresponding to the identification information.

The processing module 1802 is configured to stop, based on the second indication information, processing the information from the another apparatus.

Optionally, the aircraft control apparatus further includes:
a fourth receiving module 1806, configured to receive third indication information from the AMF network element, where the third indication information is used to indicate the aircraft to stop, when the shortest distance between the aircraft and the no-fly zone is less than or equal to the first preset value and the aircraft is in the restricted service state, sending information to the another apparatus.

The processing module 1802 is configured to stop, based on the third indication information, sending the information to the another apparatus.

Optionally, the aircraft control apparatus may alternatively not include the second receiving module, the third receiving module, and the fourth receiving module, but includes: a fifth receiving module (not shown in FIG. 19), configured to receive identification information from the AMF network element, where the identification information is used to identify an apparatus with which the aircraft is allowed to communicate; and a sixth receiving module (not shown in FIG. 19), configured to receive third indication information from the AMF network element, where the third indication information is used to indicate the aircraft to stop, when the shortest distance between the aircraft and the no-fly zone is less than or equal to the first preset value and the aircraft is in the restricted service state, sending information to another apparatus different from the apparatus corresponding to the identification information. In this case, the processing module 1802 is configured to stop, based on the third indication information, sending the information to the another apparatus.

In conclusion, in the aircraft control apparatus provided in this embodiment of this application, because the control apparatus delivers the information about the no-fly zone to the first receiving module through the AMF network element, the first receiving module can receive the information about the no-fly zone of the aircraft from the AMF network element, and the processing module can monitor whether the shortest distance between the aircraft and the no-fly zone is less than or equal to the first preset value. Therefore, when the shortest distance between the aircraft and the no-fly zone is less than or equal to the first preset value, the processing module can perform a corresponding operation, to prohibit the aircraft from flying in the no-fly zone, thereby reducing a security risk. In this way, geofences do not need to be installed on an edge of the no-fly zone, thereby simplifying an advance preparation process and reducing costs.

FIG. 20 is a schematic structural diagram of another aircraft control apparatus according to an embodiment of this application. The aircraft control apparatus may be located in a control apparatus in the communications system shown in FIG. 1. This is not limited. The control apparatus may be configured to perform an action of the control apparatus in the foregoing method embodiment. As shown in FIG. 20, the aircraft control apparatus 200 may include:
a first receiving module 2001, configured to receive reference information of an aircraft from an AMF network element, where the reference information includes at least one of first indication information and location information of the aircraft, and the first indication information is used to indicate that a shortest distance between the aircraft and a no-fly zone of the aircraft is less than or equal to a first preset value; and
a first sending module 2002, configured to send a control instruction to the aircraft based on the reference information, where the control instruction is used to prohibit the aircraft from flying in the no-fly zone.

In conclusion, in the aircraft control apparatus provided in this embodiment of this application, because the first receiving module can receive the reference information from the AMF network element, the first sending module may send, to the aircraft based on the reference information, the control instruction used to prohibit the aircraft from flying in the no-fly zone, to prohibit the aircraft from flying in the no-fly zone, thereby reducing a security risk. In this way, geofences do not need to be installed on an edge of the no-fly zone, thereby simplifying an advance preparation process and reducing costs.

Optionally, the reference information includes the location information of the aircraft. The first sending module 2002 includes a sending unit, configured to send the control instruction to the aircraft based on the location information of the aircraft in the reference information and a geographical identifier of the no-fly zone.

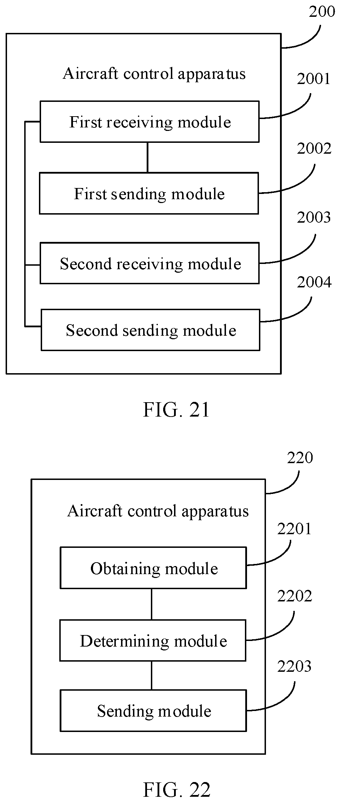

FIG. 21 is another schematic structural diagram of another aircraft control apparatus according to an embodiment of this application. As shown in FIG. 21, based on the control apparatus shown in FIG. 20, the aircraft control apparatus 200 may further include:
a second receiving module 2003, configured to receive location information from the aircraft.

The sending unit is configured to: determine, based on the location information of the aircraft in the reference information, the location information from the aircraft, and the geographical identifier of the no-fly zone, whether the shortest distance between the aircraft and the no-fly zone is less than or equal to the first preset value; and send the control instruction to the aircraft when the shortest distance between the aircraft and the no-fly zone is less than or equal to the first preset value.

Optionally, the aircraft control apparatus further includes:
a second sending module 2004, configured to send the geographical identifier of the no-fly zone to the AMF network element, a PCF network element, or a UDM network element.

In conclusion, in the aircraft control apparatus provided in this embodiment of this application, because the first receiving module can receive the reference information from the AMF network element, the first sending module may send, to the aircraft based on the reference information, the control instruction used to prohibit the aircraft from flying in the no-fly zone, to prohibit the aircraft from flying in the no-fly zone, thereby reducing a security risk. In this way, geofences do not need to be installed on an edge of the no-fly zone, thereby simplifying an advance preparation process and reducing costs.

FIG. 22 is a schematic structural diagram of another aircraft control apparatus according to an embodiment of this application. The aircraft control apparatus may be located in the AMF network element, the PCF network element, or the UDM network element in FIG. 1. This is not limited. The control apparatus may be configured to perform an action of the control apparatus in the foregoing method embodiment. As shown in FIG. 22, the aircraft control apparatus 220 may include:
an obtaining module 2201, configured to obtain a geographical identifier of a no-fly zone of an aircraft;
a determining module 2202, configured to determine a network identifier of the no-fly zone based on the geographical identifier of the no-fly zone; and
a sending module 2203, configured to send the network identifier of the no-fly zone to the AMF network element or the aircraft.

Optionally, the obtaining module 2201 may be configured to receive the geographical identifier of the no-fly zone from a control apparatus.

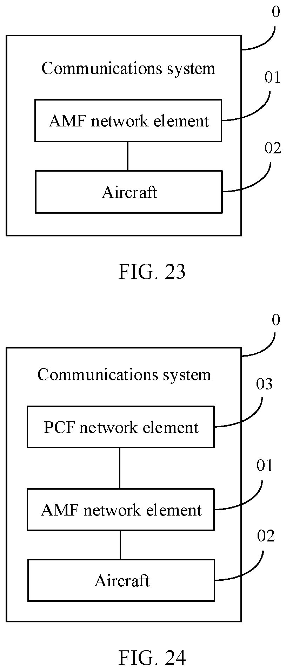

FIG. 23 is a schematic structural diagram of a communications system according to an embodiment of this application. As shown in FIG. 23, the communications system 0 may include an AMF network element 01 and an aircraft 02. The aircraft 02 includes the aircraft control apparatus shown in FIG. 18 or FIG. 19.

Optionally, the AMF network element 01 may include the aircraft control apparatus shown in FIG. 14, FIG. 15, FIG. 16, or FIG. 17.

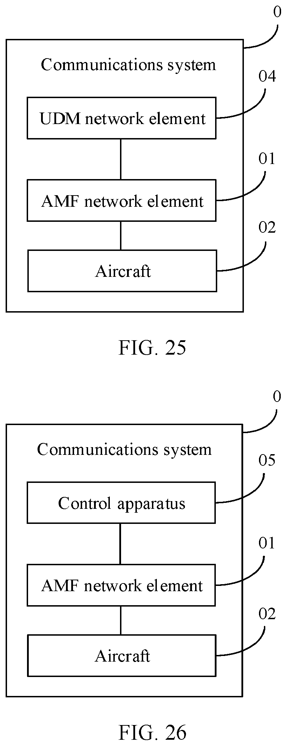

Optionally, the AMF network element 01 may further include the aircraft control apparatus shown in FIG. 22. Alternatively, as shown in FIG. 24, the communications system 0 further includes a PCF network element 03, and the PCF network element 03 includes the aircraft control apparatus shown in FIG. 22. Alternatively, as shown in FIG. 25, the communications system 0 further includes a UDM network element 04, and the UDM network element 04 includes the aircraft control apparatus shown in FIG. 22.

FIG. 26 is another schematic structural diagram of a communications system according to an embodiment of this application. As shown in FIG. 26, the communications system 0 may include an AMF network element 01, an aircraft 02, and a control apparatus 05.

The AMF network element 01 includes the aircraft control apparatus shown in FIG. 14, FIG. 15, FIG. 16, or FIG. 17. The control apparatus 05 includes the aircraft control apparatus shown in FIG. 20 or FIG. 21.

Optionally, the aircraft 02 may include the aircraft control apparatus shown in FIG. 18 or FIG. 19.

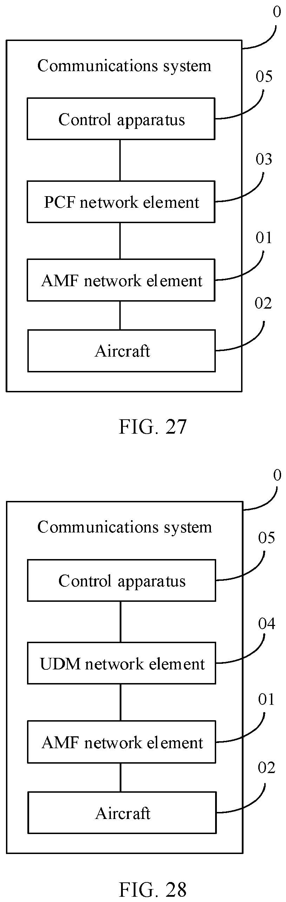

Optionally, the AMF network element 01 may further include the aircraft control apparatus shown in FIG. 22. Alternatively, as shown in FIG. 27, the communications system 0 further includes a PCF network element 03, and the PCF network element 03 includes the aircraft control apparatus shown in FIG. 22. Alternatively, as shown in FIG. 28, the communications system 0 further includes a UDM network element 04, and the UDM network element 04 includes the aircraft control apparatus shown in FIG. 22.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of the present invention are generated. The computer may be a general-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid state disk), or the like.

## Claims

1. An aircraft control method, **characterized by** comprising:
obtaining (301), by an access management function network element, information about a no-fly zone of an aircraft, wherein the access management function network element is a core network element;
obtaining, by the access management function network element, location information of the aircraft;
determining, by the access management function network element, based on the location information of the aircraft and the information about the no-fly zone, whether the shortest distance between the aircraft and the no-fly zone is less than or equal to a first preset value; and
sending (302), by the access management function network element, reference information to a control apparatus when a shortest distance between the aircraft and the no-fly zone is less than or equal to the first preset value, wherein
the reference information comprises at least one of first indication information and location information of the aircraft, and the first indication information is used to indicate that the shortest distance between the aircraft and the no-fly zone is less than or equal to the first preset value.

2. The method according to claim 1, wherein the method further comprises:
determining, by the access management function network element based on the location information of the aircraft and the information about the no-fly zone, that the shortest distance between the aircraft and the no-fly zone is less than or equal to the first preset value.

3. The method according to claim 2, wherein the information about the no-fly zone comprises the network identifier of the no-fly zone, and the network identifier of the no-fly zone comprises an identifier of at least one cell; and the determining, by the access management function network element based on the location information of the aircraft and the information about the no-fly zone, that the shortest distance between the aircraft and the no-fly zone is less than or equal to the first preset value comprises:
determining, by the access management function network element based on the location information of the aircraft, that a distance between the aircraft and a center point of a coverage area of any one of the at least one cell is less than or equal to the first preset value.

4. The method according to claim 1, wherein the information about the no-fly zone comprises the network identifier of the no-fly zone, and the network identifier of the no-fly zone comprises an identifier of at least one cell; and the method further comprises:
when the access management function network element determines that the aircraft accesses any one of the at least one cell, determining, by the access management function network element, that the shortest distance between the aircraft and the no-fly zone is less than or equal to the first preset value.

5. The method according to any one of claims 1 to 4, further comprising:
receiving (501), by the control apparatus, the reference information of the aircraft from the access management function network element, wherein the reference information comprises at least one of first indication information and location information of the aircraft, and the first indication information is used to indicate that a shortest distance between the aircraft and the no-fly zone of the aircraft is less than or equal to the first preset value; and
sending (502), by the control apparatus, a control instruction to the aircraft based on the reference information, wherein the control instruction is used to prohibit the aircraft from flying in the no-fly zone.

6. The method according to claim 5, wherein the reference information comprises the location information of the aircraft; and the sending, by the control apparatus, a control instruction to the aircraft based on the reference information comprises:
sending, by the control apparatus, the control instruction to the aircraft based on the location information of the aircraft in the reference information and a geographical identifier of the no-fly zone.

7. The method according to claim 6, wherein the method further comprises:
receiving, by the control apparatus, location information from the aircraft; and
the sending, by the control apparatus, the control instruction to the aircraft based on the location information of the aircraft in the reference information and a geographical identifier of the no-fly zone comprises:
determining, by the control apparatus based on the location information of the aircraft in the reference information, the location information from the aircraft, and the geographical identifier of the no-fly zone, whether the shortest distance between the aircraft and the no-fly zone is less than or equal to the first preset value; and
sending, by the control apparatus, the control instruction to the aircraft when the shortest distance between the aircraft and the no-fly zone is less than or equal to the first preset value.

8. The method according to any one of claims 5 to 7, wherein the method further comprises:
sending, by the control apparatus, the geographical identifier of the no-fly zone to the access management function network element, a policy control function, PCF, network element, or a unified data management, UDM, network element.

9. A communications apparatus, comprising:
a memory, configured to store a program; and
a processor, configured to: be coupled to the memory, invoke the program in the memory, and execute the program to implement the method according to any one of claims 1 to 4.

10. A computer readable storage medium, wherein the storage medium stores a computer program; and
the computer program is executed by a processor, to implement the method according to any one of claims 1 to 4.

## Patentansprüche

1. Flugzeugsteuerungsverfahren, **dadurch gekennzeichnet, dass** es umfasst:
Erhalten (301), durch ein Zugangsverwaltungsfunktionsnetzwerkelement, von Informationen über eine Flugverbotszone eines Flugzeugs, wobei das Zugangsverwaltungsfunktionsnetzwerkelement ein Kernnetzwerkelement ist;
Erhalten, durch das Zugangsverwaltungsfunktionsnetzwerkelement, von Ortsinformationen des Flugzeugs;
Bestimmen, durch das Zugangsverwaltungsfunktionsnetzwerkelement, basierend auf den Ortsinformationen des Flugzeugs und den Informationen über die Flugverbotszone, ob die kürzeste Entfernung zwischen dem Flugzeug und der Flugverbotszone kleiner oder gleich einem ersten voreingestellten Wert ist; und
Senden (302), durch das Zugangsverwaltungsfunktionsnetzwerkelement, von Referenzinformationen an eine Steuervorrichtung, wenn eine kürzeste Entfernung zwischen dem Flugzeug und der Flugverbotszone kleiner oder gleich dem ersten voreingestellten Wert ist, wobei
die Referenzinformationen zumindest eines von ersten Angabeinformationen und Ortsinformationen des Flugzeugs umfassen und die ersten Angabeinformationen zum Angeben, dass die kürzeste Entfernung zwischen dem Flugzeug und der Flugverbotszone kleiner oder gleich dem ersten voreingestellten Wert ist, verwendet werden.

2. Verfahren nach Anspruch 1, wobei das Verfahren ferner umfasst:
Bestimmen, durch das Zugangsverwaltungsfunktionsnetzwerkelement, basierend auf den Ortsinformationen des Flugzeugs und den Informationen über die Flugverbotszone, dass die kürzeste Entfernung zwischen dem Flugzeug und der Flugverbotszone kleiner oder gleich dem ersten voreingestellten Wert ist.

3. Verfahren nach Anspruch 2, wobei die Informationen über die Flugverbotszone den Netzwerkidentifikator der Flugverbotszone umfassen und der Netzwerkidentifikator der Flugverbotszone einen Identifikator von zumindest einer Zelle umfasst und das Bestimmen, durch das Zugangsverwaltungsfunktionsnetzwerkelement, basierend auf den Ortsinformationen des Flugzeugs und den Informationen über die Flugverbotszone, dass die kürzeste Entfernung zwischen dem Flugzeug und der Flugverbotszone kleiner oder gleich dem ersten voreingestellten Wert ist, umfasst:
Bestimmen, durch das Zugangsverwaltungsfunktionsnetzwerkelement, basierend auf den Ortsinformationen des Flugzeugs, dass eine Entfernung zwischen dem Flugzeug und einem Mittelpunkt eines Abdeckungsbereichs von einer der zumindest einen Zelle kleiner oder gleich dem ersten voreingestellten Wert ist.

4. Verfahren nach Anspruch 1, wobei die Informationen über die Flugverbotszone den Netzwerkidentifikator der Flugverbotszone umfassen und der Netzwerkidentifikator der Flugverbotszone einen Identifikator von zumindest einer Zelle umfasst und das Verfahren ferner umfasst:
wenn das Zugangsverwaltungsfunktionsnetzwerkelement bestimmt, dass das Flugzeug in eine der zumindest einen Zelle eintritt, Bestimmen, durch das Zugangsverwaltungsfunktionsnetzwerkelement, dass die kürzeste Entfernung zwischen dem Flugzeug und der Flugverbotszone kleiner oder gleich dem ersten voreingestellten Wert ist.

5. Verfahren nach einem der Ansprüche 1 bis 4, ferner umfassend:
Empfangen (501), durch die Steuervorrichtung, der Referenzinformationen des Flugzeugs vom Zugangsverwaltungsfunktionsnetzwerkelement, wobei die Referenzinformationen zumindest eines von ersten Angabeinformationen und
Ortsinformationen des Flugzeugs umfassen und die ersten Angabeinformationen zum Angeben, dass eine kürzeste Entfernung zwischen dem Flugzeug und der Flugverbotszone des Flugzeugs kleiner oder gleich dem ersten voreingestellten Wert ist, verwendet werden; und
Senden (502), durch die Steuervorrichtung, einer Steueranweisung an das Flugzeug basierend auf den Referenzinformationen, wobei die Steueranweisung zum Nichtzulassen, dass das Flugzeug in die Flugverbotszone fliegt, verwendet wird.

6. Verfahren nach Anspruch 5, wobei die Referenzinformationen die Ortsinformationen des Flugzeugs umfassen und das Senden, durch die Steuervorrichtung, einer Steueranweisung an das Flugzeug basierend auf den Referenzinformationen umfasst:
Senden, durch die Steuervorrichtung, der Steueranweisung an das Flugzeug basierend auf den Ortsinformationen des Flugzeugs in den Referenzinformationen und einem geografischen Identifikator der Flugverbotszone.

7. Verfahren nach Anspruch 6, wobei das Verfahren ferner umfasst:
Empfangen, durch die Steuervorrichtung, von Ortsinformationen vom Flugzeug und
wobei das Senden, durch die Steuervorrichtung, der Steueranweisung an das Flugzeug basierend auf den Ortsinformationen des Flugzeugs in den Referenzinformationen und einem geografischen Identifikator der Flugverbotszone umfasst:
Bestimmen, durch die Steuervorrichtung basierend auf den Ortsinformationen des Flugzeugs in den Referenzinformationen, den Ortsinformationen vom Flugzeug und dem geografischen Identifikator der Flugverbotszone, ob die kürzeste Entfernung zwischen dem Flugzeug und der Flugverbotszone kleiner oder gleich dem ersten voreingestellten Wert ist; und
Senden, durch die Steuervorrichtung, der Steueranweisung an das Flugzeug, wenn die kürzeste Entfernung zwischen dem Flugzeug und der Flugverbotszone kleiner oder gleich dem ersten voreingestellten Wert ist.

8. Verfahren nach einem der Ansprüche 5 bis 7, wobei das Verfahren ferner umfasst:
Senden, durch die Steuervorrichtung, des geografischen Identifikators der Flugverbotszone an das Zugangsverwaltungsfunktionsnetzwerkelement, ein Richtlinienkontrollfunktionsnetzwerkelement, PCF-Netzwerkelement, oder ein Netzwerkelement für eine vereinheitlichte Datenverwaltung, UDM-Netzwerkelement.

9. Kommunikationsvorrichtung, umfassend:
einen Speicher, der zum Speichern eines Programms ausgelegt ist; und
einen Prozessor, der ausgelegt ist zum: Koppeln an den Speicher, Aufrufen des Programms im Speicher und Ausführen des Programms zum Implementieren des Verfahrens nach einem der Ansprüche 1 bis 4.

10. Computerlesbares Speichermedium, wobei das Speichermedium ein Computerprogramm speichert und das Computerprogramm zum Implementieren des Verfahrens nach einem der Ansprüche 1 bis 4 durch einen Prozessor ausgeführt wird.

## Revendications

1. Procédé de commande d'aéronef, **caractérisé en ce qu'**il comporte :
l'obtention (301), par un élément de réseau de fonction de gestion d'accès, d'informations concernant une zone d'exclusion aérienne d'un aéronef, l'élément de réseau de fonction de gestion d'accès étant un élément de réseau central ;
l'obtention, par l'élément de réseau de fonction de gestion d'accès, d'informations de localisation de l'aéronef ;
la détermination, par l'élément de réseau de fonction de gestion d'accès, d'après les informations de localisation de l'aéronef et les informations concernant la zone d'exclusion aérienne, si la plus courte distance entre l'aéronef et la zone d'exclusion aérienne est inférieure ou égale à une première valeur préétablie ; et
l'envoi (302), par l'élément de réseau de fonction de gestion d'accès, d'informations de référence à un appareil de commande lorsqu'une plus courte distance entre l'aéronef et la zone d'exclusion aérienne est inférieure ou égale à la première valeur préétablie,
les informations de référence comportant des premières informations d'indication et/ou des informations de localisation de l'aéronef, et les premières informations d'indication étant utilisées pour indiquer que la plus courte distance entre l'aéronef et la zone d'exclusion aérienne est inférieure ou égale à la première valeur préétablie.

2. Procédé selon la revendication 1, le procédé comportant en outre :
la détermination, par l'élément de réseau de fonction de gestion d'accès d'après les informations de localisation de l'aéronef et les informations concernant la zone d'exclusion aérienne, du fait que la plus courte distance entre l'aéronef et la zone d'exclusion aérienne est inférieure ou égale à la première valeur préétablie.

3. Procédé selon la revendication 2, les informations concernant la zone d'exclusion aérienne comportant l'identifiant de réseau de la zone d'exclusion aérienne, et l'identifiant de réseau de la zone d'exclusion aérienne comportant un identifiant d'au moins une cellule ; et la détermination, par l'élément de réseau de fonction de gestion d'accès d'après les informations de localisation de l'aéronef et les informations concernant la zone d'exclusion aérienne, du fait que la plus courte distance entre l'aéronef et la zone d'exclusion aérienne est inférieure ou égale à la première valeur préétablie comportant :
la détermination, par l'élément de réseau de fonction de gestion d'accès d'après les informations de localisation de l'aéronef, du fait qu'une distance entre l'aéronef et un point central d'une aire de couverture de l'une quelconque de l'au moins une cellule est inférieure ou égale à la première valeur préétablie.

4. Procédé selon la revendication 1, les informations concernant la zone d'exclusion aérienne comportant l'identifiant de réseau de la zone d'exclusion aérienne, et l'identifiant de réseau de la zone d'exclusion aérienne comportant un identifiant d'au moins une cellule ; et le procédé comportant en outre :
lorsque l'élément de réseau de fonction de gestion d'accès détermine que l'aéronef accède à l'une quelconque de l'au moins une cellule, la détermination, par l'élément de réseau de fonction de gestion d'accès, du fait que la plus courte distance entre l'aéronef et la zone d'exclusion aérienne est inférieure ou égale à la première valeur préétablie.

5. Procédé selon l'une quelconque des revendications 1 à 4, comportant en outre :
la réception (501), par l'appareil de commande, des informations de référence de l'aéronef en provenance de l'élément de réseau de fonction de gestion d'accès, les informations de référence comportant des premières informations d'indication et/ou des informations de localisation de l'aéronef, et les premières informations d'indication étant utilisées pour indiquer qu'une plus courte distance entre l'aéronef et la zone d'exclusion aérienne de l'aéronef est inférieure ou égale à la première valeur préétablie ; et
l'envoi (502), par l'appareil de commande, d'une instruction de commande à l'aéronef d'après les informations de référence, l'instruction de commande étant utilisée pour interdire à l'aéronef de voler dans la zone d'exclusion aérienne.

6. Procédé selon la revendication 5, les informations de référence comportant les informations de localisation de l'aéronef ; et l'envoi, par l'appareil de commande, de l'instruction de commande à l'aéronef d'après les informations de référence comportant :
l'envoi, par l'appareil de commande, de l'instruction de commande à l'aéronef d'après les informations de localisation de l'aéronef dans les informations de référence et un identifiant géographique de la zone d'exclusion aérienne.

7. Procédé selon la revendication 6, le procédé comportant en outre :
la réception, par l'appareil de commande, d'informations de localisation en provenance de l'aéronef ; et
l'envoi, par l'appareil de commande, de l'instruction de commande à l'aéronef d'après les informations de localisation de l'aéronef dans les informations de référence et un identifiant géographique de la zone d'exclusion aérienne comportant :
la détermination, par l'appareil de commande d'après les informations de localisation de l'aéronef dans les informations de référence, les informations de localisation en provenance de l'aéronef, et l'identifiant géographique de la zone d'exclusion aérienne, si la plus courte distance entre l'aéronef et la zone d'exclusion aérienne est inférieure ou égale à la première valeur préétablie ; et
l'envoi, par l'appareil de commande, de l'instruction de commande à l'aéronef lorsque la plus courte distance entre l'aéronef et la zone d'exclusion aérienne est inférieure ou égale à la première valeur préétablie.

8. Procédé selon l'une quelconque des revendications 5 à 7, le procédé comportant en outre :
l'envoi, par l'appareil de commande, de l'identifiant géographique de la zone d'exclusion aérienne à l'élément de réseau de fonction de gestion d'accès, à un élément de réseau de fonction de commande de politique, PCF, ou à un élément de réseau de gestion unifiée de données, UDM.

9. Appareil de communications, comportant :
une mémoire, configurée pour stocker un programme ; et
un processeur, configuré pour : être couplé à la mémoire, invoquer le programme présent dans la mémoire, et exécuter le programme pour mettre en oeuvre le procédé selon l'une quelconque des revendications 1 à 4.

10. Support de stockage lisible par ordinateur, le support de stockage stockant un programme d'ordinateur ; et
le programme d'ordinateur étant exécuté par un processeur, pour mettre en oeuvre le procédé selon l'une quelconque des revendications 1 à 4.
